Europäisches Patentamt

European Patent Office

Office européen des brevets

(19)

(11) EP 0 540 403 B1

(12) **FASCICULE DE BREVET EUROPEEN**

(45) Date de publication et mention
de la délivrance du brevet:
**30.12.1998 Bulletin 1998/53**

(51) Int Cl.⁶: **H04N 5/262**, H04N 5/76

(21) Numéro de dépôt: **92402896.2**

(22) Date de dépôt: **26.10.1992**

(54) **Système d'analyse vidéo du montage d'un programme télévisé diffusé ou enregistré et son utilisation pour les techniques de post production, notamment multilingues**

Videoanalyseverfahren für die Bearbeitung eines übertragenen oder aufgezeichneten Fernsehprogramms und ihre Verwendung für Nachbearbeitungstechniken, insbesondere in mehrere Sprachen

Video analysis system for editing a broadcasted or recorded television program and its use for post-production techniques, particularly multilingual

(84) Etats contractants désignés:
**CH DE ES FR GB IT LI NL SE**

(30) Priorité: **30.10.1991 FR 9113397**

(43) Date de publication de la demande:
**05.05.1993 Bulletin 1993/18**

(73) Titulaire: **Etablissement Public Télédiffusion de France**
**75015 Paris (FR)**

(72) Inventeurs:
• **Lebrat, François**
**F-75013 Paris (FR)**

• **Fouillet, Jean-Marie**
**F-93330 Neuilly sur Marne (FR)**
• **Etienne, Francis**
**F-92140 Clamart (FR)**

(74) Mandataire: **Fréchède, Michel et al**
**Cabinet Plasseraud**
**84, rue d'Amsterdam**
**F-75009 Paris (FR)**

(56) Documents cités:
**EP-A- 0 378 393      FR-A- 2 630 572**
**GB-A- 2 226 718      US-A- 4 746 994**
**US-A- 5 040 081**

EP 0 540 403 B1

## Description

Les systèmes de télévision à qualité améliorée, et les systèmes de télévision du futur à haute définition, proposent, par rapport aux systèmes de télévision conventionnels SECAM ou PAL, non seulement une amélioration de la qualité des signaux vidéo et audio-fréquence diffusés mais également une variété d'extensions aux fonctionnalités existantes, ou même l'introduction de nouveaux services.

A titre d'exemple, on rappellera que le système de diffusion D2-MAC/Paquets, outre l'amélioration de la qualité des images et des sons, propose, notamment, une extension de la capacité des canaux réservés à la transmission des données d'accompagnement de programmes, contrôle d'accès, sous-titres, la possibilité de diffuser plusieurs programmes sonores simultanément, pour la diffusion de programmes multilingues, l'introduction d'un format d'image élargi de rapport 16/9, ce format devant faire l'objet des programmes télévisés diffusés en haute définition dans le futur.

Bien que le système de diffusion D2-MAC/Paquets soit actuellement opérationnel, l'adaptation de ce système à la télévision haute définition devant être opérationnelle dans les trois à quatre prochaines années, le potentiel de ce système de diffusion est cependant sous exploité, car la mise en oeuvre des services additionnels précités implique la réalisation en studio d'opérations complémentaires de production ou de préparation des programmes dont la faisabilité technique et les coûts correspondants ne sont pas totalement maîtrisés.

Dans l'attente d'une évolution des techniques de production vidéo et de l'apparition d'un volume significatif de production associé, les films de cinématographie constituent une ressource importante, sinon la seule, de programmes susceptibles d'exploiter immédiatement le potentiel des normes de ces nouveaux systèmes de télévision. En ce qui concerne d'ailleurs l'aspect qualitatif, tant visuel que sonore, les films de cinéma, dans leur grande majorité, permettent d'atteindre, après transfert sur support vidéo, la qualité optimale que peuvent procurer les systèmes de diffusion de télévision à haute définition. En outre, un atout majeur des films de cinéma produits pour une exploitation en salle est leur format d'image, lequel se prête facilement à la préparation de programmes de télévision au format élargi 16/9. Toutefois, si le film de cinéma est destiné à être diffusé en format 16/9 au moyen d'un système de télévision assurant une réception compatible avec le format d'image conventionnel 4/3 par panoramage, c'est-à-dire par réduction des zones latérales correspondantes, une opération de post-production doit être effectuée en studio, avant la diffusion, afin d'établir pour chaque image du programme la position du recadrage compatible au format 4/3.

D'autres fonctionnalités peuvent être mises en oeuvre en exploitant et en complétant des travaux qui ont déjà été accomplis pour l'exploitation en salle des films de cinéma.

Dans le cadre de l'élaboration de programmes multilingues, une économie sur les coûts de fabrication de tels programmes peut être obtenue avec les films de cinéma en collectant, pour un même film, les versions sonores qui ont déjà été traduites ou doublées pour être exploitées dans différents pays. Le travail complémentaire consiste alors à synchroniser les différentes versions sonores retenues avec une version vidéo commune choisie comme référence image.

Dans le cadre de l'élaboration de sous-titres, à partir de l'utilisation d'archives de films de cinéma sous-titrés, un principe analogue peut être appliqué, selon les normes établies pour la télévision.

Les modes opératoires et les installations utilisées par les sociétés spécialisées dans les divers travaux de post-production de films de cinéma ou vidéo ont fait l'objet de nombreuses publications.

D'une manière générale, en ce qui concerne l'automatisation des outils de post-production, on peut constater une introduction de stations de montage, lesquelles permettent à un opérateur humain de télécommander à partir d'un poste centralisé l'ensemble des équipements intervenant dans la fabrication du produit final, tels que magnétoscopes, magnétophones, mélangeurs vidéo audio, ..., de simuler le résultat d'un montage avant son exécution, écoute et visionnage par l'opérateur, de mémoriser une liste de décisions de montage, et de fabriquer, par assemblage sélectif, un produit final en exécutant automatiquement les instructions de montage mémorisées.

On notera cependant que l'automatisation du processus de montage précité est limitée à des télécommandes d'équipements et à la fabrication finale du produit lorsque les décisions de montage, établies par l'opérateur humain, ont été mémorisées.

Bien entendu, d'une façon générale, le travail de post-production consiste donc à assembler des images et des sons préalablement enregistrés, à partir de prises de vues d'origine (appelées "rushes" en langage anglo-saxon), ou à enrichir un programme existant d'informations complémentaires telles que sons additionnels, sous-titres, données d'assistance, pour élaborer un programme final, destiné à être télé-diffusé.

Une part importante et essentielle du travail de l'opérateur humain assurant le montage consiste à repérer sur les supports source ou enregistrements d'origine les séquences images, constituées par une ou plusieurs images, et qui seront utilisées pour réaliser le produit final. En télévision, les magnétoscopes disposent à cet effet d'un code temporel qui associe, à chaque image enregistrée, un instant unique de la forme heure, minute, seconde, numéro d'image. Le code temporel précité permet d'asservir la lecture des magnétoscopes, pour le visionnage ou l'enregistrement final. Les séquences à monter sont ainsi repérées par un code temporel de début et de fin.

Dans le cas particulier d'une opération de post-synchronisation multilingue, une première étape d'analyse est effectuée par l'opérateur humain afin d'identifier les divergences entre les conducteurs, ou guides de montage - listes d'enchaînement des séquences d'images - des différentes versions doublées puis de définir au cas par cas les solutions à mettre en oeuvre pour traiter les incidents relevés. La dernière étape est la réalisation du support final, conformément aux instructions de montage vidéo et de traitement du son qui auront été retenues par l'opérateur humain.

Un premier inconvénient de ce processus opératoire est, bien sûr, le temps passé par l'opérateur humain pour discriminer et relever les informations de repérage des séquences d'images, ou plans, en visionnant les enregistrements d'origine. On rappellera qu'un plan est une succession d'images présentant, pour un observateur ou un spectateur, une analogie d'activité scénique. On notera d'ailleurs que pour bon nombre d'applications de post-production, le repérage des plans, ou séquences d'images, se limite à un relevé des codes temporels de début et de fin du plan, caractéristiques de ce dernier, ces valeurs étant mémorisées pour l'assemblage du support du programme final.

Un autre inconvénient du processus opératoire précité concerne la précision du repérage, laquelle peut être affectée non seulement d'une erreur de lecture de l'opérateur humain, mais aussi par le fait que lorsqu'un magnétoscope effectue une lecture à faible vitesse ou en mode discret, image par image, ce qui est nécessaire pour la réalisation du visionnage par l'opérateur humain, l'exactitude du code temporel associé à l'image courante n'est pas toujours garantie. Un tel inconvénient est susceptible d'être particulièrement gênant lorsque le montage nécessite une précision à l'image près, notamment dans le cas du recadrage ou panoramage 16/9, 4/3, de la post-synchronisation audio par exemple.

Dans le cas particulier de l'élaboration d'un programme multilingue, par post-synchronisation de versions doublées préexistantes, considérées comme enregistrements d'origine, le mode opératoire actuel repose sur une première comparaison de deux versions monolingues pour fabriquer une version bilingue provisoire, puis effectuer une comparaison de la version bilingue précitée avec une autre version monolingue pour réaliser une version trilingue, et ainsi de suite. Un inconvénient d'un tel mode opératoire est une perte de la qualité d'enregistrement du produit ou programme multilingue final, en raison des dégradations des enregistrements des données audio- ou vidéo-fréquence provoquées sur les copies successives par les matériels d'enregistrement.

Parmi les travaux ayant eu pour objet d'introduire une certaine automatisation des travaux de post-production, en particulier en ce qui concerne la détermination des plans successifs d'une séquence d'images, on peut citer le système d'éditeur dynamique d'images vidéo décrit dans la demande de brevet européen EP-A-0 378 393.

Dans le système précité, un numéro de scène est attribué à chaque image dans une liste mémorisée. La discrimination des images d'un même plan est effectuée à chaque image par l'intermédiaire d'un signal différence d'image temporelle de luminance, de composante de couleur, de densité ou de volume et présuppose l'existence de différences de la valeur moyenne de la caractéristique entre images.

En effet, un tel système, basé sur la seule comparaison de ce signal à une valeur de seuil, ne permet ni une analyse en tant que telle de l'activité scénique proprement dite au niveau des images, ni une discrimination effective correspondante.

La présente invention a pour objet de remédier aux inconvénients précités par la mise en oeuvre d'un systèmed'analyse vidéo du montage d'un programme télévisé diffusé ou enregistré permettant d'effectuer les opérations de post-production de manière quasi automatique, l'intervention de l'opérateur humain étant pratiquement supprimée ou réservée à quelques cas singuliers.

Un autre objet de la présente invention est la mise en oeuvre d'un système d'analyse vidéo en temps réel du montage d'un programme télévisé diffusé ou enregistré, permettant de relever, pendant la réception d'un programme diffusé ou la lecture d'un programme enregistré, un indicateur des variations temporelles de la composition du signal image et d'identifier les différentes séquences d'images ou plans, du programme considéré, ce qui permet de discriminer qualitativement les différents plans tels que sec, ou "cut" en langage anglo-saxon, fondus enchaînés ou autres du programme considéré.

Un autre objet de la présente invention est la mise en oeuvre d'un système d'analyse vidéo en temps réel d'un montage d'un programme télévisé diffusé ou enregistré, permettant d'identifier les discordances de montage vidéo pouvant intervenir entre plusieurs versions d'enregistrement d'un même programme, afin d'établir un conducteur permettant de réaliser une version finale de programme optimisée par des opérations de post-production.

Un autre objet de la présente invention est enfin l'utilisation d'un système d'analyse vidéo en temps réel d'un montage d'un programme télévisé diffusé ou enregistré pour la réalisation, à partir d'une pluralité de versions monolingues différentes, d'un programme multilingue, par des opérations de post-synchronisation.

Le système d'analyse vidéo du montage d'un programme télévisé diffusé ou enregistré sous forme d'une succession d'images, chaque image étant diffusée ou enregistrée sous forme de données audio- et vidéo-fréquence associées à l'image d'ordre k considéré et d'un code temporel associé représentatif de ladite image, objet de la présente invention, est remarquable en ce qu'il comprend des circuits de mesure de l'évolution temporelle de la composition des images, par détermination, entre deux images successives d'ordre k-1, k, d'un signal différence d'image et de paramètres correspondants représentatifs de l'activité scénique du programme diffusé ou enregistré pour un groupe d'au moins deux images successives, d'ordre k-1,k. Des circuits d'analyse du programme diffusé ou enregistré permettent, à partir du signal différence et des paramètres correspondants représentatifs de l'activité scénique, d'établir des données représentatives du découpage en plans, constitués d'un groupe de p images successives, du programme diffusé ou enregistré.

L'utilisation d'un système d'analyse vidéo d'un montage d'un programme télévisé diffusé ou enregistré sous forme d'une succession d'images, conformément à la déclaration précédente, est remarquable en ce que, en vue de réaliser une composition de programmes télévisés à récit multilingue par post-synchronisation de programmes à récit monolingue, attributs d'images vidéo communes d'un même programme, cette utilisation consiste à effectuer une étape d'analyse de chaque programme monolingue pour établir les données représentatives en plans, constitués d'un groupe de pl image successives, où pl désigne, pour la version monolingue 1 considérée, le nombre d'images constitutives d'un plan Pl considéré, puis à établir une corrélation systématique entre les différents plans de chaque version monolingue, constitués d'un nombre déterminé pl d'images successives pour chaque version monolingue et chaque récit monolingue, cette corrélation permettant de retenir les données temporelles et/ou cardinales en nombre d'images successives pl constitutives d'un plan Pl donné minimales et maximales permettant de supporter tous les récits monolingues considérés. Les données sont alors mémorisées sous forme vectorielle (Pml, Pl1, pl1, ..., Plt, plt, ..., Pln, pln), de façon à constituer une trame de composition ou de montage du programme multilingue dans laquelle, à l'ordre des plans Pml pouvant entrer dans la composition du programme multilingue final sont associés, pour chaque version monolingue 1, 1 représentant l'ordre de la version monolingue considérée, l'ordre du plan Plt, le nombre d'images successives plt et les données temporelles de début et de fin du plan Plt considéré.

Le système d'analyse vidéo du montage d'un programme télévisé diffusé ou enregistré objet de la présente invention trouve application à toutes les techniques de post-production telles que automatisation du repérage des changements de plans intervenant dans un programme pour l'élaboration et la synchronisation de diverses données d'accompagnement de programmes, recadrage par panoramage, sous-titrage, colorisation de films d'origine noir et blanc, automatisation du processus de post-synchronisation de films pour l'élaboration de programmes de télévision multilingues à partir d'enregistrements d'origine doublés. Il peut également être utilisé dans des opérations de contrôle de durée de diffusion d'émissions sur des enregistrements parallèles d'antenne, de conformité du cahier des charges des sociétés de programmes, de conformité des temps de diffusion de spots publicitaires ou des temps de paroles lors des campagnes électorales.

Une description plus détaillée du système d'analyse vidéo du montage d'un programme télévisé diffusé ou enregistré objet de la présente invention sera donnée dans la description ci-après et dans les dessins dans lesquels :

- la figure 1 représente un schéma synoptique d'un système d'analyse vidéo objet de la présente invention,
- la figure 2a représente un schéma synoptique d'un premier mode de réalisation entièrement en technologie numérique d'un élément du système tel que représenté en figure 1,
- la figure 2b représente différents histogrammes caractéristiques de nombre d'occurences, pour une image, des valeurs d'amplitude des échantillons vidéo,
- la figure 2c représente un schéma synoptique d'un deuxième mode de réalisation en technologie numérique et analogique, du même élément que dans le cas de la figure 2a,
- la figure 3a représente un schéma synoptique de réalisation de circuits de calcul d'histogramme et de quantification des comptes des banques,
- la figure 3b représente, en ses points 1 à 4, différents diagrammes relatifs à l'établissement de l'histogramme mis en oeuvre en figure 3a,
- la figure 3c représente différents gabarits de décision de niveau d'activité scénique, ces niveaux étant subdivisés en situation d'absence d'activité, activité faible, activité moyenne et activité forte ;
- la figure 4a représente divers types de plans type permettant, par comparaison, le découpage en plans successifs d'un programme diffusé, ces plans types étant caractérisés par le mode de variation de leur activité scénique pendant un temps ou un nombre d'images successives donné correspondant,
- la figure 4b représente, de manière analogique la structure du signal représentatif du découpage en plans d'un programme télévisé diffusé ou enregistré, tel que délivré par le système objet de la présente invention représenté en figure 1.
- la figure 5a représente un schéma synoptique d'une installation permettant l'utilisation d'un système d'analyse vidéo dans une application à la composition de programmes télévisés à récit multilingue par post-synchronisation de programmes à récit monolingue attributs d'image vidéo communes d'un même programme,
- la figure 5b représente un schéma synoptique relatif au système d'obtention des plans d'activité scénique, sans relation établie de façon définitive,
- la figure 6a représente un algorithme de comparaison avec critère d'égalité stricte pour trois plans consécutifs d'une première et d'une deuxième version monolingue,
- la figure 6b représente un algorithme de comparaison pour trois plans consécutifs avec critère d'égalité stricte pour un plan d'ordre N et critère d'égalité proche ou très proche pour les 2 plans environnants,
- la figure 6c représente un algorithme de comparaison avec critère d'égalité proche ou très proche pour trois plans consécutifs,

- la figure 7 représente un organigramme d'un programme de mise en relation des plans d'une première et d'une deuxième version monolingue pour réaliser une version bilingue.
- les figures 8a, 8b et 8c représentent une variante avantageuse de mise en coïncidence de plans ou synchronisation de différentes versions linguistiques monolingues.

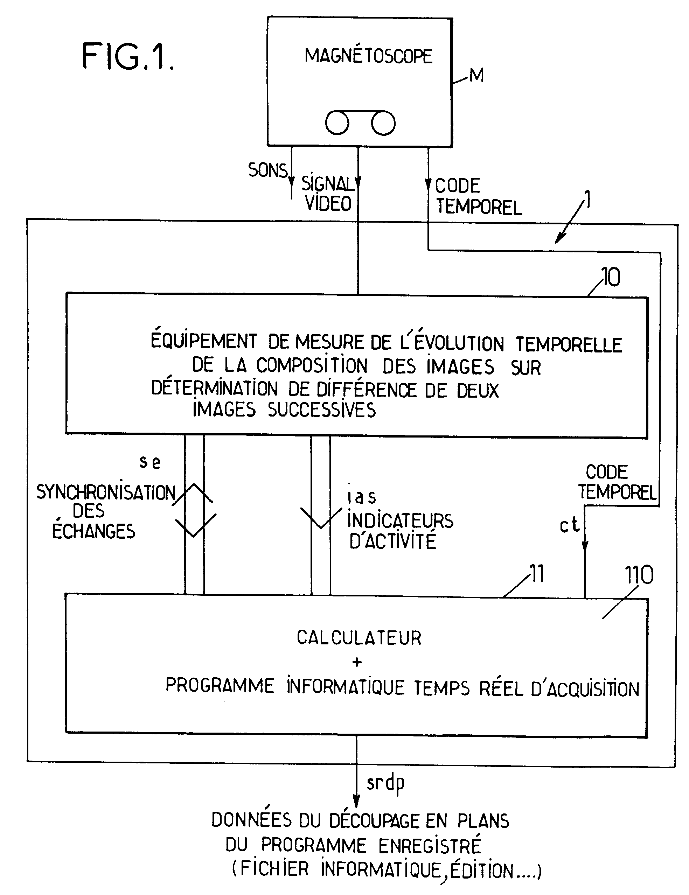

Une description plus détaillée du système d'analyse vidéo du montage d'un programme télévisé, objet de la présente invention, sera maintenant donné en liaison avec la figure 1 et les figures suivantes.

D'une manière générale, on considère que le programme précité est télévisé, diffusé ou enregistré sous forme d'une succession d'images, chaque image étant diffusée ou enregistrée sous forme de données audio-et vidéo-fréquence associées à l'image d'ordre k considéré et d'un code temporel, noté ct, associé et représentatif de cette image. Sur la figure 1, on a représenté à titre de pur exemple non limitatif le programme précité délivré par exemple par un magnétoscope, noté M, au système 1 objet de la présente invention. Les signaux essentiels délivrés par le magnétoscope sont ainsi, le signal audio-fréquence, le signal vidéo-fréquence et le code temporel, ct, précédemment cité.

D'une manière générale, on considère que les signaux précités sont des signaux délivrés sous forme numérique, afin de simplifier et de condenser la description ci-après.

Ainsi qu'on l'a représenté en figure 1, le système 1 objet de la présente invention comprend, un circuit 10 de mesure de l'évolution temporelle de la composition des images, ce circuit, conformément à un aspect particulièrement remarquable de l'objet de la présente invention, permettant la mesure de l'évolution précitée par détermination, entre deux images successives d'ordre k-1,k, d'un signal différence d'image et de paramètres correspondants représentatifs de l'activité scénique du programme diffusé ou enregistré pour un groupe d'au moins 2 images successives d'ordre k-1,k précité.

En outre, ainsi qu'on l'a également représenté en figure 1, le système 1 objet de la présente invention comprend un circuit 11 d'analyse du programme diffusé ou enregistré permettant, à partir du signal différence d'images précédemment mentionné, et, essentiellement des paramètres correspondants représentatifs de l'activité scénique entre deux images successives, d'établir des données représentatives du découpage en plans, ces plans étant constitués d'un groupe de p images successives du programme télévisé diffusé ou enregistré. Sur la figure 1, les données représentatives du découpage en plans sont notées srdp et désignent un signal correspondant représentatif du découpage en plans du programme précité.

On comprendra ainsi que le système objet de la présente invention permet, à partir d'une mesure de l'activité scénique de deux images consécutives, l'activité scénique étant liée aux mouvements relatifs d'une image à l'image suivante des objets constitutifs de cette image et, en définitive, du plan d'observation du spectateur, de discriminer ainsi une distribution de plans successifs constitutifs du programme télévisé diffusé ou enregistré précité.

On notera également que dans l'ensemble de la description ci-après, l'ensemble des signaux numériques précités est constitué, soit par des signaux numériques transmis par les BUS de liaison entre les différents éléments constitutifs du système d'analyse vidéo du montage d'un programme télévisé diffusé ou enregistré objet de la présente invention, soit par des fichiers informatiques correspondants, contenant les données numériques représentatives de l'information véhiculée par les signaux précités.

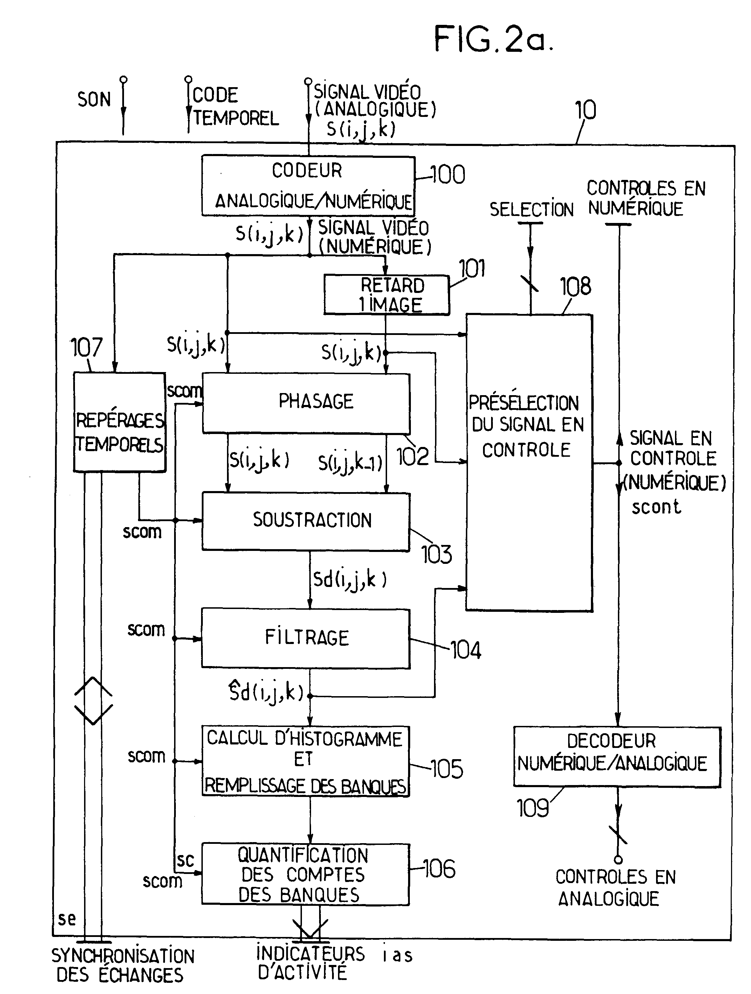

Une description plus détaillée du circuit 10 de mesure de l'évolution temporelle de la composition des images sera donnée en liaison avec la figure 2a.

La présente description du circuit 10 de mesure de l'évolution temporelle de la composition des images, conformément à l'objet de la présente invention, est donnée dans le cadre de l'exemple non limitatif d'un signal vidéo numérique de type 4-2-2 transmis en 625 lignes en temps réel, afin d'en mesurer l'évolution temporelle de la composition des images véhiculées par ce signal vidéo.

Pour une description plus détaillée de la forme du signal vidéo précité, on pourra utilement se reporter à la norme correspondante établie en 1982 par le CCIR (Comité Consultatif International des Radiocommunications) et, en particulier, aux Recommandations 601 et 656, volume XI des Avis et Rapports du CCIR.

Dans le mode de réalisation précité, le traitement appliqué, conformément à l'objet de la présente invention, est restreint aux données numériques du signal de luminance des lignes actives de la première trame de chaque image, soit 288 lignes de 720 échantillons codés sur 8 bits au rythme de 25 images par seconde.

Le signal vidéo précité, signal analogique, est noté, sur la figure 2a, $S(i,j,k)$.

Ainsi qu'on l'a représenté en figure 2a, le circuit 10 comporte avantageusement des circuits 100, 102, de mémorisation de la composante vidéo $S(i,j,k)$ du signal d'image, i désignant l'indice de l'échantillon de composante dans la ligne active de l'image considérée, j l'indice de ligne active dans l'image considérée, et k le numéro d'ordre de l'image analysée considérée.

On comprendra en particulier que le circuit 10 comprend en fait un convertisseur analogique-numérique 100 permettant de transformer le signal vidéo analogique $S(i,j,k)$ en un signal numérique correspondant.

En outre, le circuit 10 de mesure de l'évolution temporelle de la composition des images selon l'invention comprend également des circuits 101, 102, de mémorisation de la composante S(i,j,k-1) du signal d'image de l'image d'ordre antérieur (k-1) considéré.

On indiquera par exemple, à titre purement illustratif, que le retard d'une image pour obtenir la mémorisation de la composante vidéo S(i,j,k-1) du signal d'image relatif à l'image d'ordre antérieur k-1 peut être réalisé par un circuit mémoire d'image placé en mode "dégel", le mode "dégel" étant le mode d'acquisition-restitution temps réel d'un signal vidéo, le retard d'une image sur l'image courante étant dû aux traitements internes.

Ainsi qu'on l'a en outre représenté en figure 2a, le circuit 10 de mesure de l'évolution temporelle de la composition des images comporte un circuit, noté 102, de mise en phase du signal vidéo S(i,j,k) relatif à l'image d'ordre k, et du signal vidéo S(i,j,k-1) relatif à l'image d'ordre antérieur k-1, ce circuit 102 permettant, suite à la mémorisation des signaux vidéo précités, une lecture correspondante de ces signaux de manière synchrone, mais décalée, du seul terme d'une image, c'est-à-dire de la valeur 1 sur le paramètre k relatif à l'ordre des images successives.

Un tel circuit 102 est un circuit de type classique et ne sera pas décrit en détail dans la présente description. On comprendra en particulier que la lecture synchrone précitée peut être réalisée au moyen d'un bloc 107 tel que représenté en figure 2a, le bloc 107 permettant, à partir du signal relatif à la composante vidéo S(i,j,k) délivré par le circuit convertisseur analogique numérique 100 et d'un signal de synchronisation des échanges, se, de délivrer un signal de commande, scom, et d'assurer le cadencement de l'ensemble du traitement des signaux vidéo-numériques précités, tel que décrit en liaison avec la figure 2a.

Ainsi qu'on l'a en outre représenté sur la figure précitée, le circuit 10 de mesure de l'évolution temporelle de la composition des images comprend un circuit 103 de calcul du signal différence d'image à partir des signaux de composante vidéo S(i,j,k) et S(i,j,k-1), ce signal différence étant noté Sd(i,j,k) et vérifiant la relation :

$$Sd(i,j,k) = A.[S(i,j,k)-S(i,j,k-1)] + Sm.$$

On notera que, d'une manière générale, le calcul du signal de différence d'image Sd(i,j,k) est effectué pour chaque échantillon de l'image par traitement numérique.

En outre, le symbole S désigne bien entendu la composante du signal traité, c'est-à-dire soit la composante du signal de luminance Y, soit la composante relative aux signaux de différence de couleur CR et CB.

Dans la relation précitée, A désigne un coefficient, lequel peut être pris égal à 0,5, et Sm désigne le niveau moyen de la dynamique licite de la composante S précitée, la valeur du paramètre Sm étant choisie égale à 0,5 lorsque S désigne le signal de luminance Y, et à la valeur O lorsque S désigne un signal de différence de couleur CR ou CB. Le coefficient A peut être, soit un coefficient constant, soit une fonction appliquée à la dynamique du signal de luminance, telle que par exemple la valeur absolue de la différence $\|S(i,j,k)-S(i,j,k-1)\|$.

Ainsi qu'on l'a en outre représenté en figure 2a, le circuit 10 de mesure de l'évolution temporelle de la composition des images comprend, en cascade avec le circuit 103 de calcul du signal différence d'image, un circuit de filtrage 104 permettant d'assurer la réduction par filtrage numérique passe-bas des composantes hautes du spectre du signal vidéo différence Sd(i,j,k).

On notera que ce circuit 104 apparaît particulièrement utile dans le cas où le programme télévisé diffusé ou enregistré provient d'un film de cinématographie transféré sur support vidéo, les composantes hautes du spectre du signal vidéo différence, dans ce cas, correspondant sensiblement à des défauts tels que des rayures ou des poussières initialement présents sur le film de cinématographie, par exemple. Le circuit de filtrage 104 permet également de réduire les imperfections des traitements vidéo antérieurs tels que conversion analogique-numérique, disparité des temps de propagation de groupe entre composantes vidéo, bruit de source magnétoscope, bruit de quantification lors d'un codage numérique, sans que l'activité induite par les mouvements significatifs inter-images ne soit affectée. Le circuit de filtrage 104 délivre à sa sortie un signal différence filtré, noté $\widehat{Sd}$(i,j,k).

Ainsi qu'on l'a en outre représenté en figure 2a, le système d'analyse vidéo objet de la présente invention comporte au niveau du circuit 10 de mesure de l'évolution temporelle de la composition des images, un circuit 105 de calcul, pour chaque image d'ordre k, à partir du signal différence d'image Sd(i,j,k) et plus particulièrement, de préférence ainsi que représenté en figure 2a, du signal différence filtré $\widehat{Sd}$(i,j,k) d'un histogramme, noté HSd(k), du nombre d'occurences de chaque niveau d'amplitude du signal différence d'image, ou du signal différence d'image filtré, délivré par le circuit de filtrage 104.

Le circuit 105 de calcul de l'histogramme précité est ensuite suivi d'un circuit de calcul de paramètres correspondants d'activité scénique par comparaison de la distribution du spectre de chaque histogramme HSd(k) relatif à chaque succession d'images k-1, k, à une pluralité de distributions ou gabarits de référence représentatifs d'activité scénique correspondante.

Dans la suite de la description, le signal représentatif des paramètres d'activité scénique, constitués en un indicateur d'activité scénique, est noté ias.

D'une manière générale, on considèrera que, conformément à l'objet de la présente invention, l'analyse du signal différence d'image ou du signal différence d'image filtré $\widehat{S_d}$ (i,j,k) est réalisée par la constitution de l'histogramme de la répartition des niveaux vidéo pour le signal différence d'image précité en calculant, pour chaque niveau vidéo, le nombre d'échantillons qui ont ce niveau dans l'image considérée.

Pour un signal vidéo numérique de type 4-2-2 précédemment cité, utilisant un codage sur 8 bits, il existe 256 différentes valeurs possibles pour chaque échantillon codé. On rappelle bien entendu que le signal différence d'image Sd(i,j,k) ou le signal $\widehat{S_d}$ (i,j,k), désigne, d'une part, le signal de luminance, d'autre part, les deux signaux de différence de couleur précédemment mentionnés dans la description.

Pour un niveau numérique n d'un échantillon codé, n pouvant prendre toute valeur comprise entre O et N = 255, l'histogramme HSd(k) pour le couple d'images d'ordre k,k-1 est obtenu en calculant pour chaque valeur de n un nombre égal au nombre de fois où le codage d'un échantillon du signal différence d'image $\widehat{S_d}$ (i,j,k) filtré prend la valeur n. Bien entendu, la somme des 256 coefficients ou nombres ainsi calculés est égal au nombre total d'échantillons de la composante de différence d'image correspondante sur une image considérée.

Dans le cas où la composition de l'image n'évolue pas, cas d'une image fixe, chaque échantillon du signal différence d'image est égal à la valeur Sm donnée dans la relation 1 précédente. Ceci caractérise l'histogramme de la répartition des niveaux d'amplitude précitée par un pic pour le niveau associé à la valeur Sm, totalité des échantillons de l'image, et par une valeur nulle pour les autres niveaux d'amplitude vidéo.

Dans le cas où la composition de l'image évolue légèrement, une grande proportion des échantillons du signal différence d'image reste égale à Sm, ce qui se traduit sur l'histogramme par un élargissement du pic centré à la valeur Sm.

Bien entendu, plus cette évolution est importante, plus le nombre d'échantillons égaux à Sm diminue, et plus le pic précité s'affaisse.

Dans le cas où, au contraire, une rupture brutale intervient sur la composition des images, rupture telle que par exemple lors d'un changement de plan sec, la répartition des niveaux d'amplitude vidéo du signal de différence d'image est aléatoire, et ne privilégie donc pas l'apparition d'un pic centré sur la valeur intermédiaire Sm.

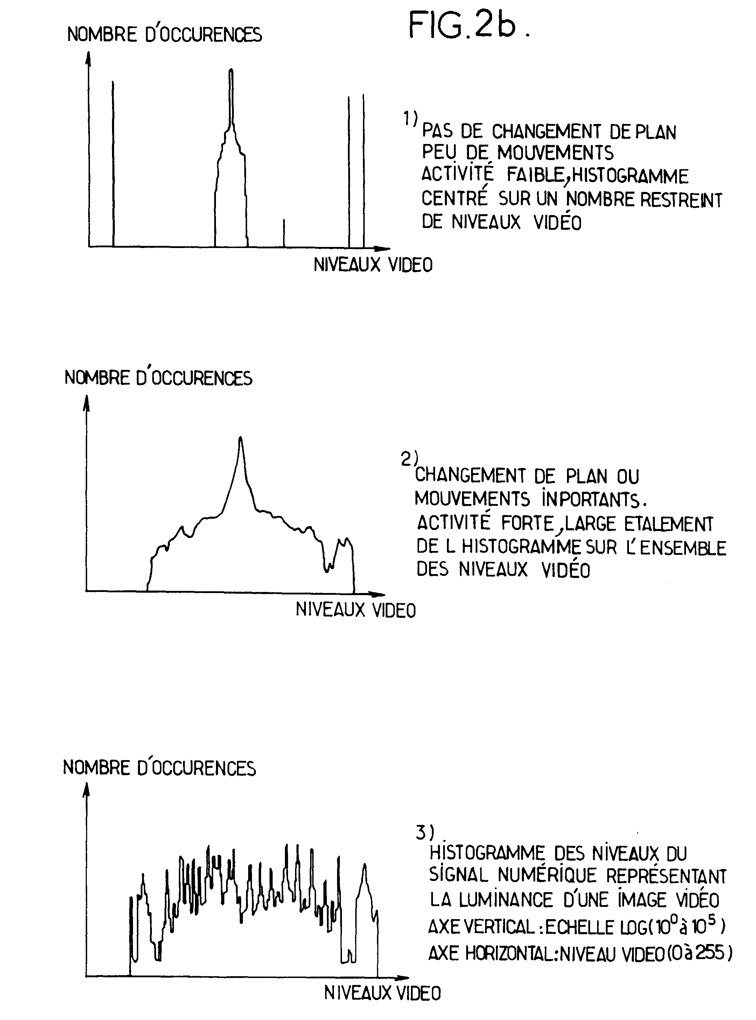

Les histogrammes relatifs au cas précédemment cités sont représentés aux points 1, 2 et 3 de la figure 2b. Les histogrammes précités correspondent à des histogrammes des niveaux d'amplitude du signal différence d'image de luminance, l'axe des abscisses étant gradué en niveau d'amplitude de 0 à 255, ainsi que décrit précédemment, et l'axe vertical en échelle logarithmique de 100 à 105.

Sur la base de l'interprétation des histogrammes de niveau vidéo du signal de différence d'image précédemment mentionnés, le circuit 106 permet d'effectuer un traitement correspondant pour synthétiser une telle information.

Le principe retenu pour réaliser la synthèse précitée est de comparer les courbes d'histogrammes à des gabarits préétablis, la gamme des niveaux d'amplitude du signal vidéo étant subdivisée en plusieurs intervalles et une sommation des comptages par niveau étant effectuée pour opérer une intégration de l'histogramme dans les zones précitées.

Pour chaque intervalle ou plage de niveau, le total obtenu est ensuite comparé à une échelle afin de déterminer un indicateur d'activité scénique ainsi qu'il sera décrit ultérieurement dans la description.

En ce qui concerne le mode de réalisation de la figure 2a, mode de réalisation en technologie numérique, on notera, en outre, la présence d'un circuit 108 permettant d'engendrer des signaux de présélection en contrôle à partir, d'une part, du signal de la composante vidéo de deux images successives S(i,j,k,), S(i,j,k-1), du signal différence d'image filtré $\widehat{S_d}$ (i,j,k) délivré par le filtre 104, ce circuit 108 permettant de délivrer un signal en contrôle numérique, noté scont, en vue de réaliser des tests sur ce signal, par exemple. En outre, un convertisseur numérique analogique 109 est prévu, lequel à partir du signal en contrôle numérique scont permet de délivrer un signal analogique correspondant permettant d'effectuer les contrôles précités en mode analogique.

La mise en oeuvre de ces signaux de contrôle ne sera pas décrite car elle n'est pas essentielle pour l'objet de la présente invention.

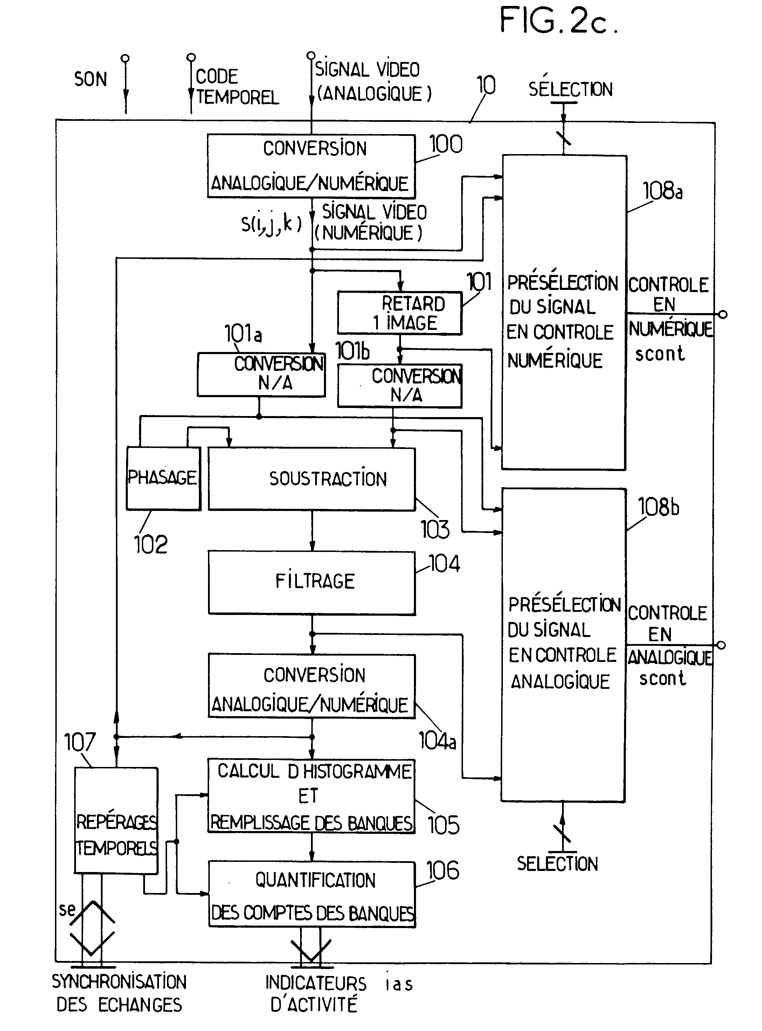

On notera que le mode de réalisation de la figure 2a peut également être remplacé par un mode de réalisation en technologie hybride numérique-analogique. Dans un tel cas, ainsi que représenté sur la figure 2c, les mêmes éléments portent les mêmes références que dans le cas de la figure 2a. On notera simplement que, suite à la mémorisation de l'image de rang antérieur k-1, par l'intermédiaire du circuit 101, peut être réalisé au moyen de deux circuits, le circuit de conversion numérique-analogique 101a, 101b, une conversion en signaux analogiques, d'une part, du signal vidéo-numérique S(i,j,k) délivré par le convertisseur analogique-numérique 100, et, d'autre part, du signal d'ordre antérieur k-1, S(i,j,k-1) délivré par le circuit de retard 101. Les signaux délivrés sous forme analogique par les convertisseurs 101a et 101b sont alors délivrés à un circuit de phasage analogique 102, à un circuit de soustraction analogique 103 et à un circuit de filtrage analogique 104. Un circuit de conversion analogique-numérique 104a permet, à partir du signal filtré de différence d'images, délivré par le circuit de filtrage 104, de repasser en signal numérique, les circuits 105 et 106 étant alors identiques à ceux de la figure 2a. Enfin, on notera que les circuits de présélection du signal en contrôle peuvent être réalisés sous la forme de deux circuits 108a, et 108b, permettant chacun de réaliser le signal de contrôle scont en numérique, respectivement en analogique.

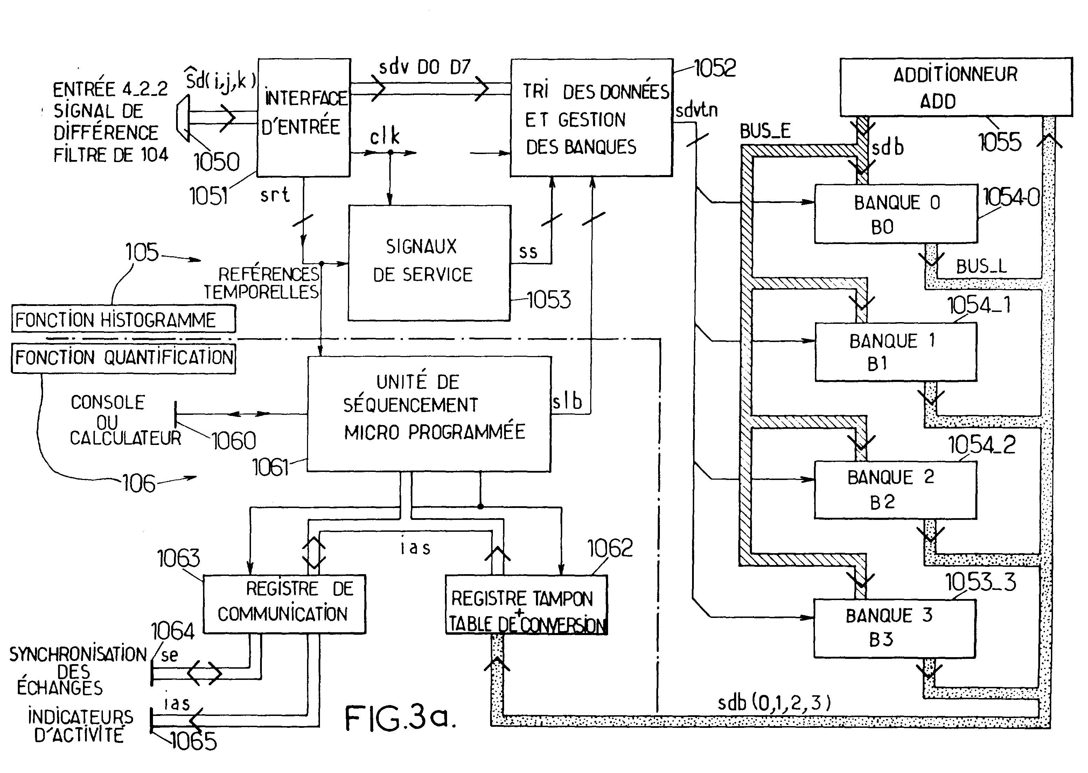

Une description plus détaillée du circuit 105 de calcul d'histogrammes et du circuit 106 de calcul des paramètres correspondants d'activité scénique, c'est-à- dire des indicateurs d'activité scénique, pour chaque image d'ordre k ou couple d'images d'ordre k, respectivement k-1, sera donnée en liaison avec la figure 2c. Bien entendu, les figures 105 et 106 étant identiques dans les modes de réalisation des figures 2a et 2c, le mode de réalisation de la figure 3a pourra être utilisé dans l'un ou l'autre des modes de réalisations précités.

Ainsi qu'on l'a représenté en figure 3a, le circuit 105 de calcul pour une image d'ordre k à partir du signal différence d'image ou du signal différence d'image filtrée $\widehat{sd}$ (i,j,k) d'un histogramme HSd(k) comporte avantageusement un port 1050 d'entrée du signal différence filtré $\widehat{sd}$ (i,j,k) relié à un circuit d'interface d'entrée, noté 1051, ce circuit d'interface d'entrée recevant le signal différence filtré précité, et délivrant des signaux référence temporels srt, des signaux de donnée vidéo, sdv, et des signaux d'horloge, notés clk.

En outre, un circuit 1053 générateur de signaux de service est prévu, ce circuit recevant d'une part les signaux de référence temporels, srt, et d'autre part, les signaux d'horloge, clk, et délivrant des signaux de service, ss, lesquels permettent d'assurer le traitement des signaux vidéo, et en particulier du signal sdv, délivré par le circuit d'interface d'entrée.

En outre, un circuit de triage 1052 des signaux de donnée vidéo, sdv, est prévu selon une loi de répartition d'histogramme par niveau de quantification.

Ce circuit de triage 1052 reçoit, d'une part, les signaux de donnée vidéo, sdv, les signaux d'horloge, clk, les signaux de service, ss, ainsi que des signaux de séquencement, slb, délivrés par une unité de séquencement microprogrammée 1061, laquelle sera décrite ultérieurement en liaison avec la description du circuit 106. Le circuit de triage des signaux de données vidéo sdv délivre des signaux de données vidéo triés par niveau, sdvtn, selon un critère de constitution de l'histogramme qui sera décrit ultérieurement dans la description.

En outre, ainsi que représenté sur la figure 3a, le circuit 105 de calcul de l'histogramme comprend une pluralité de registres de mémorisation, notés 1054-0 à 1054-3, chaque registre, destiné à recevoir et à mémoriser les signaux de données vidéo triés par niveau ou par plage de niveau, sdvtn, en fonction des niveaux de ces derniers, formant une banque de valeurs de niveaux triés.

Un circuit additionneur 1055 est prévu afin d'effectuer le décompte dans chaque banque, c'est-à-dire dans chaque registre 1054-0 à 1054-3 du nombre d'occurences des niveaux d'amplitude des signaux vidéo triés. Ce circuit additionneur, 1055, est relié par une liaison par BUS en lecture, noté BUS-L, et par une liaison par BUS en écriture, notée BUS-E, à chacun des registres formant une banque.

En ce qui concerne le circuit 106 de calcul des paramètres d'activité scénique, celui-ci, ainsiéé que représenté en figure 3a, comprend un port d'entrée 1060, et une unité de séquencement microprogrammée 1061 reliée au port d'entrée 1060 précité. L'unité de séquencement microprogrammée 1061 reçoit le signal de référence temporel srt et délivre un signal d'accès aux banques, c'est-à-dire aux registres, 1054-0 à 1054-3, ce signal d'accès étant noté slb et correspondant à un signal de lecture des banques précitées ainsi qu'il sera décrit ultérieurement dans la description.

Le circuit 106 comporte également un registre tampon, noté 1062, interconnecté par le BUS de lecture L à chacun des registres 1054-0 à 1054-3. Ce registre tampon comprend, d'une part, un circuit mémoire auxiliaire permettant de mémoriser le signal de lecture de banque relative à chaque banque, et d'autre part, une table de conversion. Cette table de conversion délivre à partir du signal de lecture de banque un signal indicateur d'activité scénique pour le couple d'images successives d'ordre k-1, k considéré, ainsi qu'il sera décrit ultérieurement dans la description. On remarquera toutefois que la table de conversion précitée peut être localisée au niveau de l'unité micro-programmée et peut être choisie parmi Q tables pré-programmées ou établie selon des critères donnés, auto-analyse, forçage ou analogues. Enfin, on notera que le circuit 106 comporte un registre de communication 1063, lequel est relié d'une part à l'unité de séquencement microprogrammée, 1061, au registre tampon 1062, par une liaison de type BUS, et d'autre part, à un premier port 1064 recevant le signal de synchronisation des échanges, se, ou le signal de commande, scom, et à un deuxième port 1065 délivrant un signal indicateur d'activité scénique, ias.

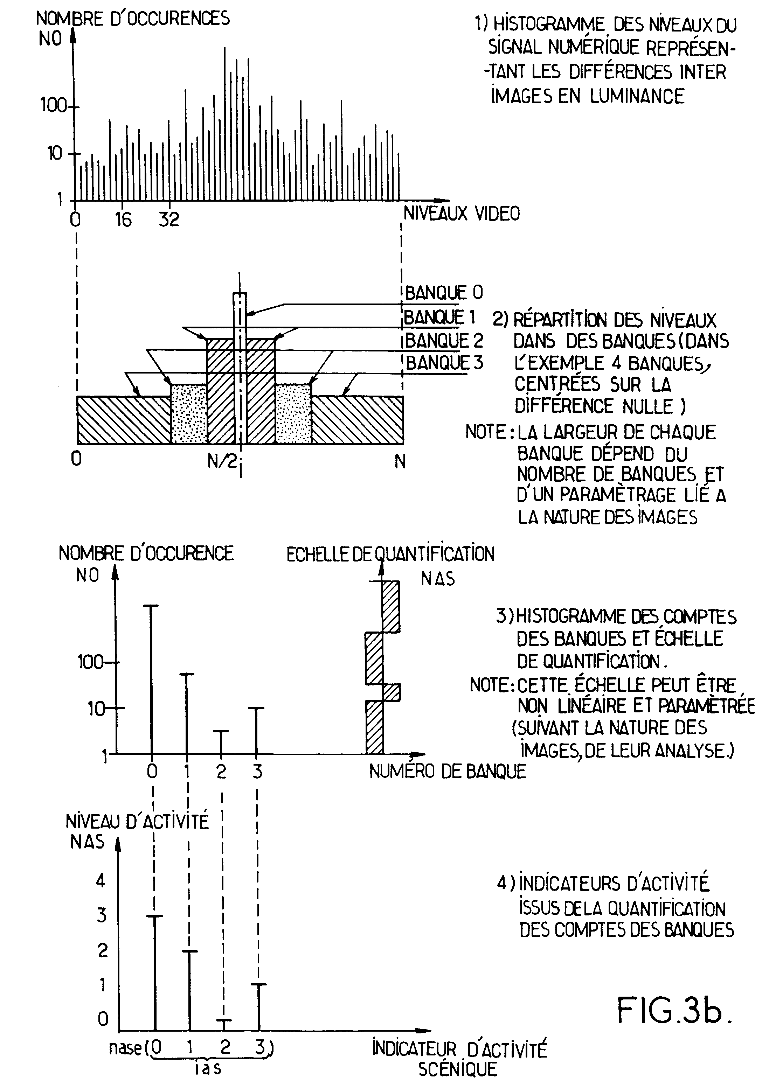

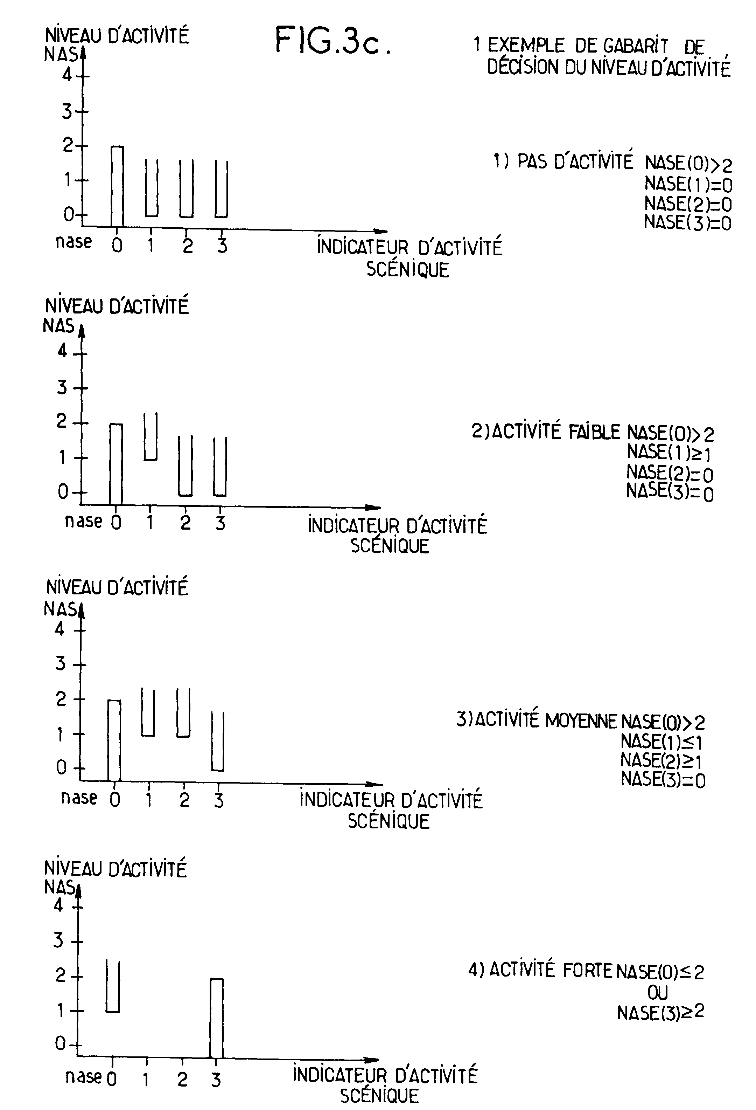

Le fonctionnement des circuits 105 et 106 réalisant respectivement le calcul de l'histogramme HSd(k) et le calcul des paramètres d'activité scénique, tel que représenté en figure 3a, sera explicité en liaison avec les figures 3b et 3c.

Sur la figure 3b, on a représenté, au point 1 de celle-ci, un histogramme des niveaux du signal numérique représentant les différences inter-image en luminance, par exemple. L'histogramme représenté au point 1 est a priori quelconque.

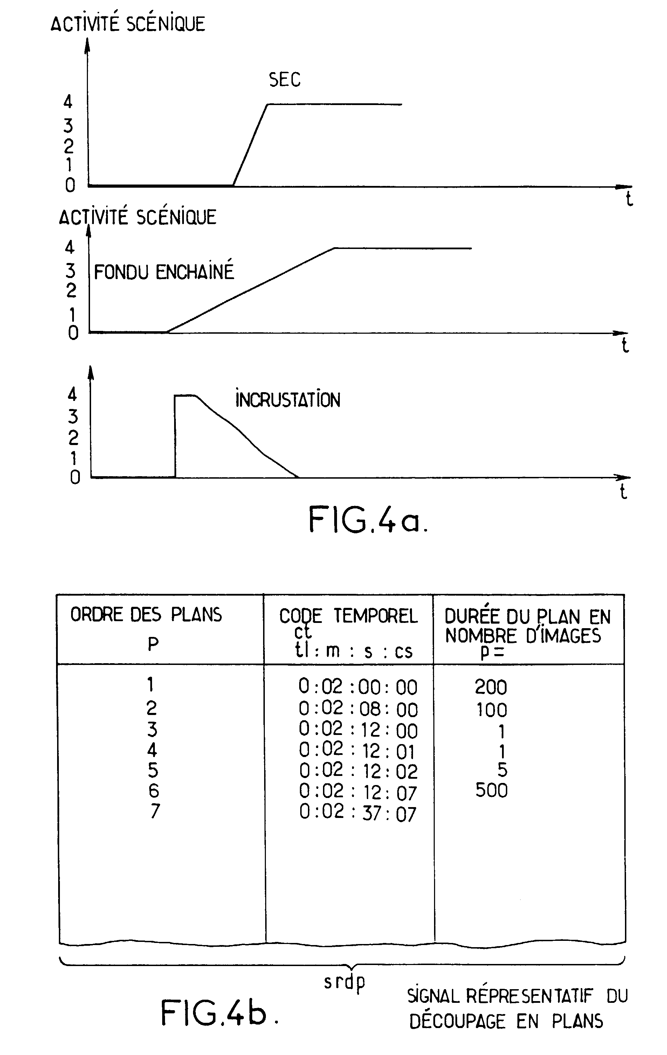

Au point 2 de la même figure 3b, on a représenté la répartition des niveaux dans les banques et, dans l'exemple particulier non limitatif de la figure 3b, et du mode de réalisation de la figure 3a, 4 banques centrées sur la différence nulle. On notera par exemple que la largeur de chaque banque dépend du nombre de banques et d'un paramètrage lié à la nature des images. Ainsi qu'on le remarquera sur le point 2 de la figure 3b, à chaque banque de valeur de niveau trié sont affectées des valeurs symétriques par rapport au niveau de valeur d'amplitude correspondant à celui de la luminance moyenne, Sm.

Ainsi, à une première banque, banque 0, est affectée une plage continue de valeurs symétriques par rapport au niveau d'amplitude de luminance moyenne, ce niveau de luminance moyenne étant repéré par N/2, n valeur des échantillons codés variant de O à N = 255 pour un codage sur 8 bits, ainsi que mentionné précédemment.

A chacune des autres banques sont affectées 2 plages de valeurs disjointes, symétriques par rapport au niveau d'amplitude de la luminance moyenne N/2. Ainsi, le spectre de l'histogramme HSd(k) est exprimé par des signaux de décompte de banque, notés sdb(0,1,2,3), relatifs chacun à la banque considérée. Chaque signal de décompte de banque représente en fait le nombre de signaux d'amplitude comprise dans la plage de valeurs d'amplitude correspondante, associée à la banque considérée.

Ainsi qu'on l'observera au point 2 de la figure 3b, à la première banque, notée banque 0, est affectée une plage de valeurs symétriques continues par rapport à la valeur N/2, à la deuxième banque, notée banque 1, sont affectées deux plages de valeurs disjointes de valeurs symétriques, ces deux plages étant adjacentes à la plage de valeurs centrales associée à la première banque, à la troisième banque, notée banque 2, sont affectées deux plages de valeurs disjointes de valeurs symétriques, ces deux plages étant elles-mêmes adjacentes respectivement aux deux plages de valeurs disjointes associées à la deuxième banque, et à la quatrième banque, notée banque 3, sont affectées 2 plages de valeurs disjointes de valeurs symétriques, ces deux plages étant elles-mêmes adjacentes respectivement aux deux plages de valeurs disjointes associées à la troisième banque.

Selon un aspect particulièrement avantageux du système objet de la présente invention, ainsi que représenté en figure 3b au point 3 de celle-ci, les signaux de décompte de banque sdb(0,1,2,3), représentatifs chacun du nombre d'occurences NO des signaux d'amplitude correspondant à celles de la plage associée à la banque considérée, sont quantifiés sur un nombre NAS de niveaux d'activité scénique, de façon à définir, pour chaque banque, un niveau d'activité scénique élémentaire quantifié, nase(0,1,2,3). Ainsi que représenté au point 4 de la figure 3b, l'ensemble des signaux de niveau d'activité scénique élémentaire quantifié, nase(0,1,2,3), forme alors les composantes d'un vecteur constituant en fait l'indicateur d'activité scénique, ias, pour le couple d'images d'ordre k-1, k considéré. Chaque composante du vecteur constituant l'indicateur d'activité scénique, ias, présente une valeur nase(0,1,2,3) repérée en valeur de niveau d'activité scénique, NAS, comportant par exemple 5 niveaux, NAS désignant la valeur maximale d'activité scénique.

Selon une autre caractéristique particulièrement avantageuse du système objet de la présente invention, l'indicateur d'activité scénique, ias, ainsi que représenté en figure 3c, est représentatif de l'absence d'activité scénique, d'une activité scénique faible, d'une activité scénique moyenne, et d'une activité scénique forte.

Ainsi qu'on l'a représenté en figure 3c, au point 1 de celle-ci, l'absence d'activité scénique constituant un gabarit de décision correspondant, est définie par un niveau d'activité scénique élémentaire relatif à la première banque nase (0), supérieur à la valeur moyenne NAS/2 des niveaux d'activité scénique, $nase(0) \geq NAS/2$, le niveau d'activité scénique élémentaire relatif aux deuxième, troisième et quatrième banques étant sensiblement nul, soit $nase(1,2,3) = 0$.

Ainsi que représenté au point 2 de la figure 3c, l'activité scénique faible, constituant un gabarit de décision du niveau d'activité scénique, est définie par un niveau d'activité scénique élémentaire relatif à la première banque, nase (0) supérieur à la valeur moyenne NAS/2 des niveaux d'activité scénique, soit $nase(0) \geq NAS/2$, le niveau d'activité scénique élémentaire relatif à la deuxième banque étant inférieur à 1, $nase(1) \leq 1$, et le niveau d'activité scénique élémentaire relatif à la troisième et à la quatrième banques étant sensiblement nul, soit $nase(2,3) = 0$.

Ainsi que représenté en figure 3c, au point 3, l'activité scénique moyenne est définie par un niveau d'activité scénique élémentaire relatif à la première banque, supérieure à la valeur moyenne NAS/2 des niveaux d'activité scénique, le niveau d'activité scénique élémentaire relatif à la deuxième et à la troisième banques étant inférieur ou égal à 1, soit $nase(1,2) \leq 1$, et le niveau d'activité scénique élémentaire relatif à la quatrième banque étant sensiblement nul, soit $nase(3) = 0$.

Ainsi que représenté en figure 3c, au point 4, l'activité scénique forte est définie par un niveau d'activité scénique élémentaire nase(0) relatif à la première banque inférieure ou égale à la valeur moyenne NAS/2 des niveaux d'activité scénique, soit $nase(0) \leq NAS/2$, ou par un niveau d'activité scénique élémentaire, relatif à la quatrième banque, supérieur ou égal à la valeur moyenne NAS/2 des niveaux d'activité scénique, soit $nase(3) \geq NAS/2$.

Le fonctionnement des circuits 105 et 106 tels que représentés en figure 3a peut alors être illustré comme suit : sur transmission du signal de différence d'image filtré $\widehat{sd}$ (i,j,k) par le port d'entrée 1050, l'interface d'entrée 1051 délivre successivement les différents échantillons pour donner le signal de données vidéo sdv. Sur séquencement par l'unité de séquencement microprogrammée 1061, le circuit 1052 assure un tri des données et la transmission du signal de données vidéo triées, sdvtn, en fonction de l'amplitude des échantillons du signal sdv vers le registre 1054-0 à 1054-3, auquel est associée la plage d'amplitude constituant la banque, telle que définie précédemment. L'additionneur 1055 permet alors d'effectuer le décompte dans chaque registre correspondant, et donc dans chaque banque, des échantillons présents et mémorisés, l'additionneur précité engendrant le signal de décompte de banque, sdb(0,1,2,3) correspondant, lequel est enregistré dans le registre 1054-0 à 1054-3 associé à la banque précitée. Sur nouveau déclenchement par l'unité de séquencement microprogrammée 1061, par l'intermédiaire du circuit de triage des données et de gestion des banques 1052, la lecture des valeurs de décompte de banques mémorisées dans chaque registre associé à chaque banque est effectuée, le signal de décompte de banque, sdb(0,1,2,3) précédemment mémorisé dans le registre correspondant, étant transmis par l'intermédiaire du BUS de lecture BUS-L au registre tampon 1062. Sur commande de l'unité de séquencement microprogrammée, d'une part, le signal de décompte de banques, sdb(0,1,2,3), est mémorisé par le registre tampon précité, puis transformé par la table de conversion de façon à engendrer, à partir du signal de décompte de banques, le signal indicateur d'activité scénique, ainsi que décrit en liaison avec les points 3 et 4 de la figure 3b, et 1 à 4 de la figure 3c pour le couple d'image successif d'ordre k-1, k considéré.

Le circuit 11 d'analyse du programme diffusé ou enregistré permet alors de poursuivre le traitement.

Ainsi qu'on l'a en outre représenté en figure 1, le circuit 11 d'analyse du programme diffusé ou enregistré permet à partir du signal différence d'image et plus particulièrement des paramètres correspondants représentatifs de l'activité scénique, de recevoir le signal de synchronisation des échanges, se, le signal indicateur d'activité scénique, noté ias, dont le mode d'obtention a été décrit précédemment dans la description, ces deux premiers signaux étant délivrés par le circuit de mesure de l'évolution temporelle de la composition des images portant la référence 10, et le signal de code temporel, noté ct, délivré par exemple par le magnétoscope M.

D'une manière générale, on comprendra que le circuit 11 d'analyse du programme diffusé ou enregistré comprend un circuit calculateur 110, interconnecté au circuit de mesure de l'évolution temporelle de la composition des images 10, et recevant les trois signaux, se, ias, et ct, précédemment décrits.

Le circuit calculateur 110 permet une mémorisation des paramètres d'activité scénique et comporte un logiciel de discrimination permettant de sélectionner les images d'ordre k considérées, ou les groupes de p images, dont les paramètres d'activité scénique sont supérieurs à une ou plusieurs valeurs de seuil déterminées. Le logiciel précité permet d'établir des données temporelles et/ou cardinales représentatives du découpage en plans, constituées de p images constitutives successives du programme télévisé diffusé ou enregistré. On comprendra bien sûr que, conformément au standard de transmission des images d'un programme télévisé diffusé ou enregistré, tel que le standard 4-2-2 par exemple, les données temporelles précitées peuvent facilement être converties en données cardinales correspondant aux numéros d'images par exemple.

Une description illustrative du mode opératoire du logiciel précité sera donnée en liaison avec les figures 4a et 4b.

Le signal de synchronisation des échanges, se, permet une acquisition, à la fréquence image, par le circuit calculateur 110, des données correspondant au signal de code temporel et au signal d'activité scénique, ias.

Le logiciel de discrimination permet, sur critère de discrimination de l'indicateur d'activité scénique tel que décrit précédemment en liaison avec les figures 3b et 3c, pour toute image d'ordre k ou groupe de p images d'ordre k-(p-1.k), de déterminer les points de montage de ce programme, ces points de montage correspondant à deux plans successifs P-1,P. Selon un mode de réalisation avantageux, tel que représenté en figure 4a, le critère de discrimination est établi, par exemple par rapport à 3 plans types d'activité scénique remarquable.

Un premier plan type d'activité scénique, tel que le passage d'un personnage à un autre personnage en situation de dialogue, est désigné par plan sec, ce type de plan présentant, ainsi que représenté en figure 4a, une variation temporelle brusque d'activité scénique. On comprendra en particulier que la variation brusque temporelle d'activité scénique est caractérisée par la pente de cette variation et non pas par son amplitude, sur un nombre d'images réduit, compris entre 5 et 10 par exemple.

Un deuxième plan type désigné par plan de fondu-enchaîné présente une activité scénique à transition temporelle sensiblement linéaire, le fondu-enchaîné étant caractérisé par une plage de valeurs de pente pour un nombre d'images beaucoup plus important que la transition d'activité scénique correspondant au plan sec précité, soit par un rapport de nombre d'images de l'ordre de 10.

Un troisième plan type, désigné par plan d'incrustation, tel que représenté en figure 4a, présente une variation temporelle d'activité scénique de type impulsionnel, le plan type précité étant alors caractérisé par une variation très rapide, inférieure ou égale à 2 images en durée du niveau d'activité scénique.

On comprendra que, d'une manière générale, les plans types précités sont définis par la valeur de l'indicateur d'activité scénique et la valeur d'activité scénique déterminées ainsi que décrit précédemment en relation avec la figure 3c et la comparaison de l'évolution de cette activité sur un nombre d'images données, ainsi que décrit précédemment.

Ainsi, le circuit calculateur 110, grâce à l'utilisation du logiciel précité, permet de délivrer un signal représentatif pour le programme diffusé correspondant de son découpage en plans, ce signal étant noté srdp sur la figure 1. Chaque plan de rang p est alors défini, ainsi que représenté sur la figure 4b, par un code temporel de début, un code temporel de fin. On notera bien sûr qu'à la suite du traitement correspondant, le code temporel de début d'un plan P correspond au code temporel de fin du plan antérieur P-1. Bien entendu, le signal précité peut également comporter un code relatif à l'ordre des plans déterminés et, le cas échéant, un code relatif au nombre d'images p constitutives de chaque plan. Bien entendu, le signal srdp peut alors être mémorisé et constitué en fichier, ainsi qu'il a déjà été indiqué dans la description.

On notera que le système d'analyse vidéo du montage d'un programme télévisé diffusé ou enregistré objet de la présente invention précédemment décrit dans la description permet de disposer ainsi automatiquement de l'ensemble des codes temporels relatifs à des changements de plans intervenant dans le montage du programme précité, ce programme ayant été enregistré sur un support vidéo, par exemple.

Ainsi, une grande partie des tâches fastidieuses de repérage manuel de plan par visionnage par un opérateur humain, peut être délégué au système précité, ce qui procure un gain de temps et une économie des coûts de post-production par exemple.

Dans le but de pouvoir être exploité facilement dans les installations de post-production actuellement existantes, le système d'analyse vidéo objet de la présente invention peut être doté d'un circuit d'interface de communication informatique afin de permettre la transmission des informations précitées et notamment des fichiers constitués par le signal représentatif de découpage en plans à une large gamme d'équipements, telle que micro-ordinateurs, stations de montage, stations de colorisation ou analogue.

Ainsi qu'il sera décrit ci-après dans la description, le système d'analyse vidéo objet de la présente invention peut être utilisé afin d'établir automatiquement la comparaison entre plusieurs versions différentes d'un même programme. Une telle utilisation peut être effectuée par corrélation entre les conducteurs relatifs aux différentes versions.

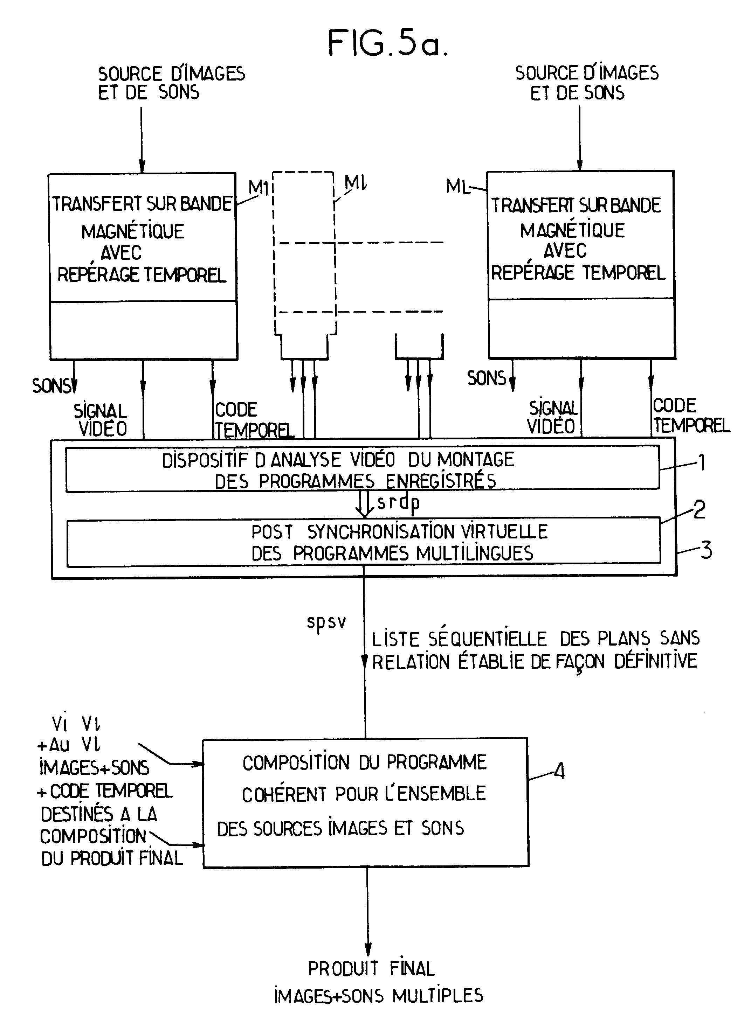

Une telle utilisation sera plus particulièrement décrite en liaison avec les figures 5a et suivantes.

Sur la figure 5a, on a représenté le matériel nécessaire à la mise en oeuvre de l'utilisation précitée. On notera en particulier que le matériel précité est configuré de la façon ci-après : plusieurs magnétoscopes, notés M1 à ML, ces magnétoscopes étant interconnectés au système d'analyse vidéo du montage d'un programme télévisé, noté 1, tel que précédemment décrit en liaison avec la présente description. Le système d'analyse vidéo 1 est interconnecté à un module 2 de post-synchronisation virtuelle des programmes. L'utilisation précitée sera plus particulièrement décrite dans une application à la création de programmes télévisés diffusés ou enregistrés multilingues à partir de différentes versions monolingues. La réunion du système d'analyse vidéo 1 et du module de post-synchronisation virtuelle des programmes 2 est représentée dans la figure 5a par une unité fonctionnelle unique, notée 3, cette unité étant réputée délivrer un signal de post-synchronisation visuelle, noté spsv, directement utilisable par un module de composition du programme 4, ainsi qu'il sera décrit ci-après dans la description.

D'une manière générale, et en vue de réaliser une composition de programmes télévisés à récit multilingue par post-composition de programmes à récit monolingue, ces récits monolingues formant les attributs d'images vidéo communes d'un même programme, l'utilisation précitée consiste à effectuer une étape d'analyse de chaque programme monolingue pour établir les données représentatives du découpage en plans constitués d'un groupe de pl images successives, où pl désigne, pour la version monolingue 1 considérée, le nombre d'images constitutives d'un plan Pl correspondant. Bien sûr, sur la figure 5a, les versions monolingues, VI, V1 à VL, sont transmises séquentiellement par exemple par chaque magnétoscope Ml correspondant.

Une corrélation systématique entre les différents plans Pl de chaque version monolingue, constitués chacun d'un nombre déterminé pl d'images successives pour chaque version monolingue VI considérée, est réalisée afin d'établir une cohérence temporelle entre tous les plans Pl de chaque version monolingue et chaque récit monolingue. On comprendra bien sûr que cette corrélation permet de retenir les données temporelles et/ou cardinales, en nombre d'images successives, pl, constitutives d'un plan, Pl, donné minimales et maximales, permettant de supporter tous les récits monolingues considérés. Les données issues de la corrélation précitée sont alors mémorisées sous forme vectorielle (Pml, Pl1, pl1, ..., Plt, plt, ..., Pln, pln) de façon à constituer une trame de composition ou montage de programmes multilingues, dans laquelle, à l'ordre de chaque plan Pml pouvant rentrer dans la composition du programme multilingue final sont associés, pour chaque version monolingue 1, 1 représentant l'ordre de la version monolingue considérée, l'ordre du plan Plt, le nombre d'images successives, plt, et les données temporelles de début et de fin du plan Plt considéré. Sur la figure 5a, la trame de composition de programme multilingue est représentée par le signal de post-synchronisation virtuelle des programmes multilingues, noté spsv, lequel n'est autre qu'une liste séquentielle des plans sans relation établie de façon définitive ainsi qu'il sera décrit ultérieurement dans la description.

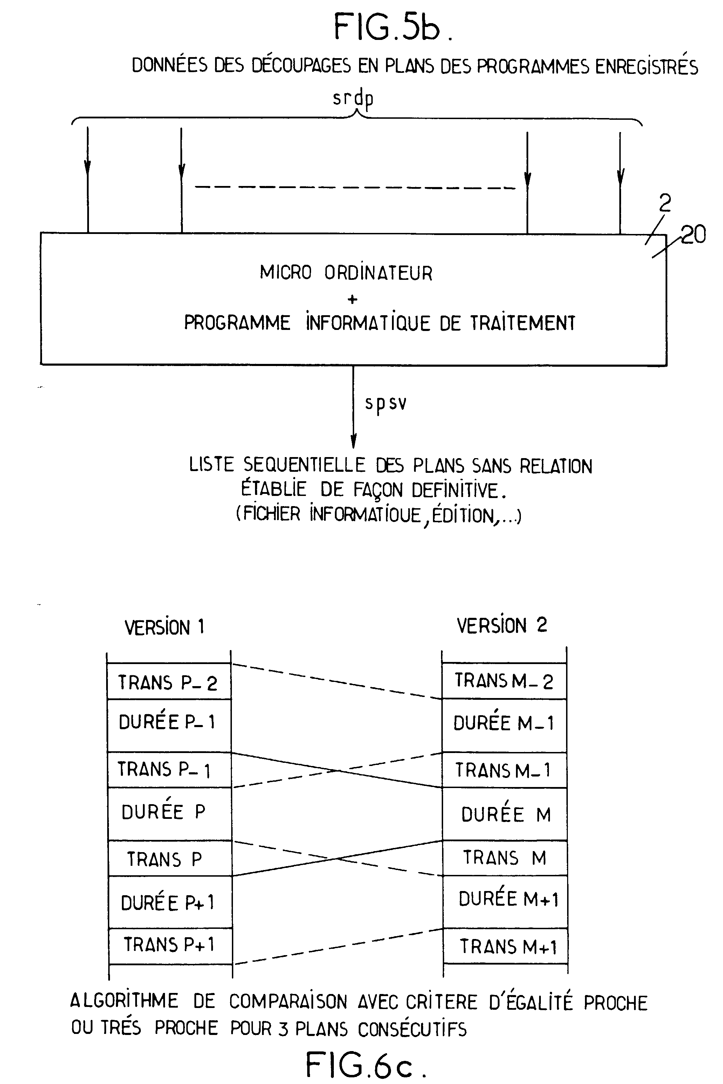

Le mode opératoire du module 2 de post-synchronisation virtuelle des programmes multilingues sera décrit en liaison avec la figure 5b.

Ainsi qu'indiqué sur la figure 5b précitée, le module 2 comprend un calculateur, tel qu'un micro-ordinateur par exemple, interconnecté en sortie du circuit 11 d'analyse du programme diffusé ou enregistré tel que représenté en figures 1 et 5a.

Le calculateur, noté 20, comprend un logiciel développé afin d'établir les relations plan à plan entre les différentes versions analysées et ainsi simplifier le travail de repérage pour l'édition des ordres de montage du produit final.

Le principe utilisé pour établir ces relations entre plans repose sur une analyse comparative, version à version, de la répartition dans le temps de la durée des plans identifiés.

Afin de lever le doute pouvant intervenir quant à la détermination des relations entre plans, par exemple lorsque des plans consécutifs ont des durées proches, une procédure consistant en un calcul en temps réel de signatures relatives à la composition du signal vidéo, avant et après la détection d'un changement de plan, peut être utilisé. Ces signatures se présentent sous la forme de données numériques et sont transmises au calculateur 20 pendant une étape d'acquisition des données d'analyse. Elles peuvent alors être exploitées afin de valider automatiquement le résultat de l'identification des relations plan à plan entre versions, VI, considérées.

Le signal représentatif de découpages en plans, srdp, relatif à chaque version monolingue, VI, comprend notamment la suite des codes temporels correspondant à une détection de changement de plans, ainsi que représenté précédemment en figure 4b.

Le logiciel de traitement permet alors d'exploiter en temps différé par exemple les fichiers de données brutes correspondantes du signal, srdp, afin d'établir de façon automatique les divergences de montage entre les différentes versions d'un même film.

Le logiciel précité se compose de 3 phases :

- une phase préparatoire au cours de laquelle, pour chaque version monolingue VI, le fichier de données brutes relatif à la version monolingue VI concerné est traité,
- une phase de mise en relation des plans au cours de laquelle sont établies les relations plan à plan entre deux versions,
- une phase finale, laquelle délivre pour l'ensemble des versions monolingues VI considérées, destinées à former la version multilingue, la liste séquentielle des plans sans relation établie de façon définitive entre versions monolingues correspondantes. La liste séquentielle des plans est désignée par le signal de post-synchronisation virtuel des programmes multilingues, spsv, le caractère virtuel de la post- synchronisation résultant du fait que la relation établie entre les plans n'est pas nécessairement définitive.

Pour chaque version monolingue, la phase préparatoire consiste à traiter et structurer le fichier de données brutes, srdp, précédemment obtenu.

Ainsi, la phase préparatoire précitée comprend une étape de filtrage complémentaire des données brutes, c'est-à-dire du signal représentatif du découpage en plans, srdp, pour engendrer un signal représentatif du découpage en plans filtré, srdp, correspondant. Par l'opération de filtrage considérée, un opérateur a la possibilté de définir des seuils de décision plus restrictifs que ceux utilisés lors de la phase d'acquisition des données brutes. Le ficher est traité pour éliminer les codes temporels lorsque le niveau des indicateurs d'activité scénique ne correspond pas aux nouveaux critères de filtrage.

L'étape de filtrage précitée est suivie d'une étape de calcul de la durée des plans et des plans de transition par soustraction des codes temporels, ct, successifs. La durée des plans est notée DUREE et la durée des plans de transition est notée TRANS.

Cette durée peut être exprimée en nombre d'images.

On notera qu'un mouvement rapide dans une séquence d'images peut engendrer, par exemple, une succession de codes temporels espacés chacun d'une image et, en conséquence, une succession de plans d'une durée égale à une image.

Selon une caractéristique de l'utilisation objet de la présente invention, ces plans de durée faible, c'est-à-dire inférieure à 10 images par exemple, sont retirés de la liste initiale des plans, c'est-à-dire du signal, srdp, obtenu en sortie du système d'analyse objet de l'invention tel que représenté en figure 1, pour être considérés comme plans de transition. De façon avantageuse, ce ou cette succession de plans constituant plan de transition est associée arbitrairement aux plans précédents dont la durée est supérieure à 10 images.

Ainsi, chaque plan est identifié, d'une part, par sa propre durée DUREE, d'autre part, par la durée du plan de transition associé à ce plan, dont la durée est notée TRANS.

Afin de simplifier l'établissement des relations plan à plan entre versions monolingues VI, l'utilisation objet de la présente invention comprend une étape de calcul et d'attribution, au premier plan de chaque version monolingue VI, d'un code temporel virtuel, TCIV, de valeur arbitraire et, par récurrence, pour chaque plan PI successif ultérieur, d'un code temporel virtuel, exprimé en nombre d'images, vérifiant la relation:

$$TCIV(PI) = TCIV(PI-1) + DUREE(PI-1) + TRANS(PI-1).$$

On notera que dans cette relation, PI désigne le numéro de plan de la version monolingue I considérée.

L'étape précitée est alors suivie d'une étape de création d'un signal représentatif du découpage en plans traités, ce signal étant bien entendu constitué en fichiers, ainsi que mentionné précédemment dans la description. Ce signal est désigné par srdpt. On notera que ce signal, ou fichier, permet l'identification de chaque plan PI et contient, outre le code temporel réel, un numéro de plan, la durée du plan correspondant exprimé par exemple en nombre d'images, la durée du plan de transition associé et un code temporel virtuel TCIV. Un fichier représentant de manière analogique le signal srdpt est donné par le tableau ci-après.

- TABLEAU 1

| FICHIER DE SORTIE DE LA PHASE PREPARATOIRE. | | | |
|---|---|---|---|
| N° DES PLANS | DUREE | TRANS | TCIV |
| 1 | 200 | 0 | 10 000 |
| 2 | 100 | 7 | 10 200 |
| 3 | 500 | 0 | 10 307 |
| . | . | . | 10 807 |

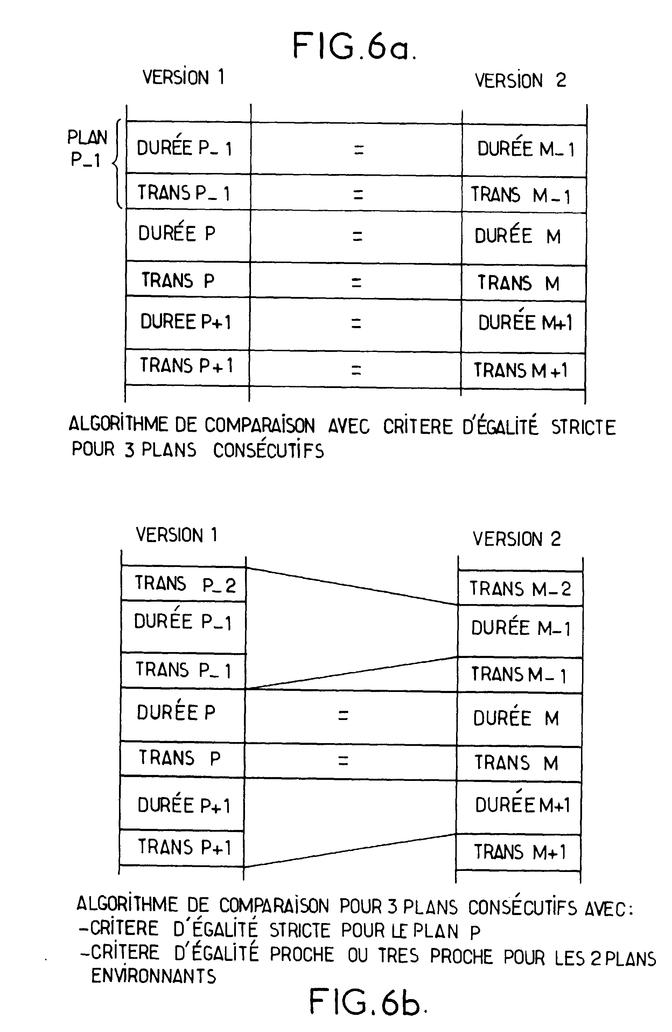

Une description plus détaillée de l'établissement de la corrélation systématique entre les différents plans de chaque version monolingue sera maintenant donnée en liaison avec les figures 6a, 6b, 6c.

D'une manière générale, on considérera que pour un nombre L de versions monolingues, la corrélation est effectuée par groupe de 2 versions monolingues. Cette corrélation entre plans successifs $PI$, $PI+1$, de deux versions monolingues $VI$, $VI+1$, est effectuée par analyse comparative de la durée et/ou du nombre correspondant d'images $pl$, $pl+1$, pour les plans considérés, ou d'une combinaison linéaire de ces durées ou des nombres d'images successives sur un nombre prédéterminé de plans successifs $PI$, $P+1,I$, ..., $P+r,I$ ; $PI+1$, $P+1,I+1$,..., $P+r,I+1$ de l'une et l'autre versions monolingues $VI$, $VI+1$ considérées.

Ainsi, pour un plan de durée donnée de la version $VI$ par exemple, on cherche dans l'autre version $VI+1$ un plan de durée égale ou voisine.

De manière générale, l'étape d'établissement de la corrélation précitée peut consister, à partir du signal représentatif du découpage en plans traités, srdpt, à effectuer une mise en relation plan à plan par comparaison de la durée DUREE des plans correspondants $PI$ ; $P+r,I+1$ des deux versions monolingues $VI,VI+1$ considérées.

De préférence, cette comparaison est effectuée par enchaînement d'étapes élémentaires de comparaison sur critère de contrainte d'égalité des durées de plan DUREE et/ou des durées de transition TRANS des plans de transition, cette contrainte d'égalité étant plus ou moins stricte.

La qualité des résultats à l'issue du traitement réalisé dans la phase de mise en relation de plans repose sur la nature des algorithmes de comparaison et sur leur ordonnancement. Ainsi, un algorithme de comparaison se limitant à l'égalité simple de durée de plan est susceptible de mettre en relation des plans de durées certes identiques, mais de contenu différent.

Ainsi, en début de phase de mise en relation de plans, on appelle les routines de comparaison à contrainte d'égalité élevée.

La contrainte d'égalité la plus forte est réalisée par une répartition d'égalité stricte des durées de plans, DUREE, et de plans de transition, TRANS, pour trois plans consécutifs dans chacune des deux versions $VI$, $VI+1$.

Un algorithme de comparaison avec critère d'égalité stricte pour 3 plans consécutifs est donné en figure 6a pour deux versions, version 1, version 2, correspondant à 1=1.

Pour la version 1 et la version 2 précitées, on considère:

**- TABLEAU 2**

| VERSION 1 | VERSION 2 |
|---|---|
| Plan P-1 (précédent) | M-1 |
| Plan P | M |
| Plan P+1 (suivant) | M+1 |

**Mise en relation du plan P de V1 avec le plan M de V2 :**

| DUREE (P-1) | = DUREE (M-1) | ET |
|---|---|---|
| TRANS (P-1) | = TRANS (M-1) | ET |
| DUREE (P) | = DUREE (M) | ET |
| TRANS (P) | = TRANS (M) | ET |
| DUREE (P+1) | = DUREE (M+1) | ET |
| TRANS (P+1) | = TRANS (M+1) | |

Par la suite, divers algorithmes peuvent alors être enchaînés tels que répartition d'égalité entre deux plans consécutifs, égalité entre la somme de trois plans consécutifs et un plan, égalité entre la somme de deux plans consécutifs et un plan, égalité simple.

On notera en outre que chacun des algorithmes de comparaison peut être activé avec un critère de précision plus ou moins contraignant :

- égalité stricte de DUREE et TRANS,
- égalité très proche à 1 à 2 % près,
- égalité proche à 3 à 5 % près.

Ce critère de précision permet d'introduire un critère de décision en logique floue. Des exemples d'algorithmes de comparaison sur 3 plans consécutifs sont donnés en figure 6a, 6b et 6c, la figure 6b correspondant à un critère d'égalité stricte pour le plan P et à un critère d'égalité proche ou très proche pour les deux plans environnants, alors que la figure 6b correspond à un algorithme de comparaison avec critère d'égalité proche ou très proche pour 3 plans consécutifs.

Selon une autre caractéristique avantageuse de l'utilisation conforme à l'objet de la présente invention, pour chaque comparaison élémentaire, la comparaison est effectuée sur une fenêtre de recherche constituant pour un plan PI d'ordre P de la version VI un environnement réduit de s plans, PI+1 à P+sI+1 de la version VI+1.

La création de cette fenêtre de recherche est justifiée par le fait que 2 plans susceptibles d'être mis en relation ont une position voisine dans leur fichier respectif. Les plans situés en début de fichier dans une version seront également situés en début de fichier dans l'autre version.

Ainsi, grâce à la création de la fenêtre de recherche, pour tout plan de la version 1, on cherche dans un environnement réduit de plans de la version 2 le plan le plus probable. La fenêtre de recherche est déterminée en valeur par la valeur du code temporel virtuel de la version 1 modulée par la largeur de la fenêtre de recherche.

Selon un autre aspect particulièrement avantageux de l'utilisation objet de la présente invention, la mise en relation de deux plans PI, respectivement P+sI+1, est immédiatement suivie d'un recalage relatif du code temporel virtuel TCIV le plus faible des deux versions VI, VI+1 monolingues considérées. En outre, le code temporel virtuel des plans suivants de la version dont le code temporel virtuel a été réactualisé, est également réactualisé jusqu'à la reconnaissance d'un code temporel virtuel déjà réactualisé.

On notera en particulier que cette réactualisation de code temporel virtuel dans les deux versions monolingues en cours de comparaison VI, VI+1, correspond à un recalage systématique de portion de film ou de programme, dont un exemple est donné ci-après dans la description. Enfin, on notera que plus le nombre de plans mis en relation est important, plus la largeur de la fenêtre de recherche est alors réduite.

Un exemple de recalage systématique de portions de film est donné ci-après en relation avec les tableaux 3, 4 et 5:

**- TABLEAU 3**

**AVANT MISE EN RELATION DE PLANS.**

|  |  |  |
|---|---|---|
|  | 14000 | TCIV = 14500 |
| TCIV = 15000 | PL1V1 / PL1V2 |  |
|  | 16000 |  |
| TCIV = 24500 |  | TCIV = 23000 |
|  | 23500 |  |
|  | PL2V1 / PL1V2 |  |
|  | 25500 |  |

Le TCIV du plan PL1V2 est dans la fenêtre de recherche (14000, 16000). PL1V2 est mis en relation avec PL1V1. Les TCIV sont remis à jour.

## - TABLEAU 4

### APRES PREMIERE MISE EN RELATION DE PLANS.

```
TCIV = 15000
                    ----- ............. -----      TCIV = 15000
                    PL1V1                  PL1V2
                    ----- ............. -----
TCIV = 24500
                    ----        23500 ----- -----  TCIV = 23500
                    PL2V1                  PL2V2
                    -----                  -----
                              25500
```

Le TCIV du plan PL2V2 est dans la fenêtre de recherche (23500, 25500). PL2V2 est mis en relation avec PL2V1. Les TCIV sont remis à jour.

## - TABLEAU 5

### APRES DEUXIEME MISE EN RELATION DE PLANS.

```
TCIV = 15000
                    ----- ............. -----      TCIV = 15000
                    PL1V1                  PL1V2
                    ----- ............. -----
TCIV = 24500
                    ----- ............. -----      TCIV = 24500
                    PL2V1                  PL2V2
                    ----- ............. -----
```

Les éventuels incidents propres à chaque version, coupure, etc., nécessitent lors de l'appel du premier algorithme de comparaison une fenêtre de recherche relativement importante.

Des études expérimentales ont permis d'établir qu'une comparaison entre deux versions d'une durée totale proche demandait une fenêtre de recherche initiale de 3 à 4 minutes (soit 4 500 à 6 000 images), alors qu'une disparité notable supérieure ou égale à 15 % sur les durées totales des deux versions nécessite une fenêtre de l'ordre de 10 à 15 minutes (soit 15 000 à 22 500 images).

On notera que la largeur de la fenêtre de recherche, liée à l'algorithme de comparaison mise en oeuvre, varie ensuite de deux minutes à une dizaine de secondes.

En Europe, pour le standard 625 lignes à 25 images/ seconde, la transcription film-vidéo est réalisée par une analyse du film à 25 images par seconde.

Pour le standard 525 lignes 30 images/secondes, la transcription film-vidéo est réalisée à 24 images par seconde. La durée d'un même film est de ce fait augmentée dans le rapport 25/24. Les valeurs du fichier issu de la phase préparatoire, c'est-à-dire, le signal sdrpt comprenant les paramètres DUREE, TRANS, TCIV, sont alors affectés d'un coefficient correcteur inverse de 24/25. Bien entendu, la ou les versions à traiter sont déterminées par essais successifs.

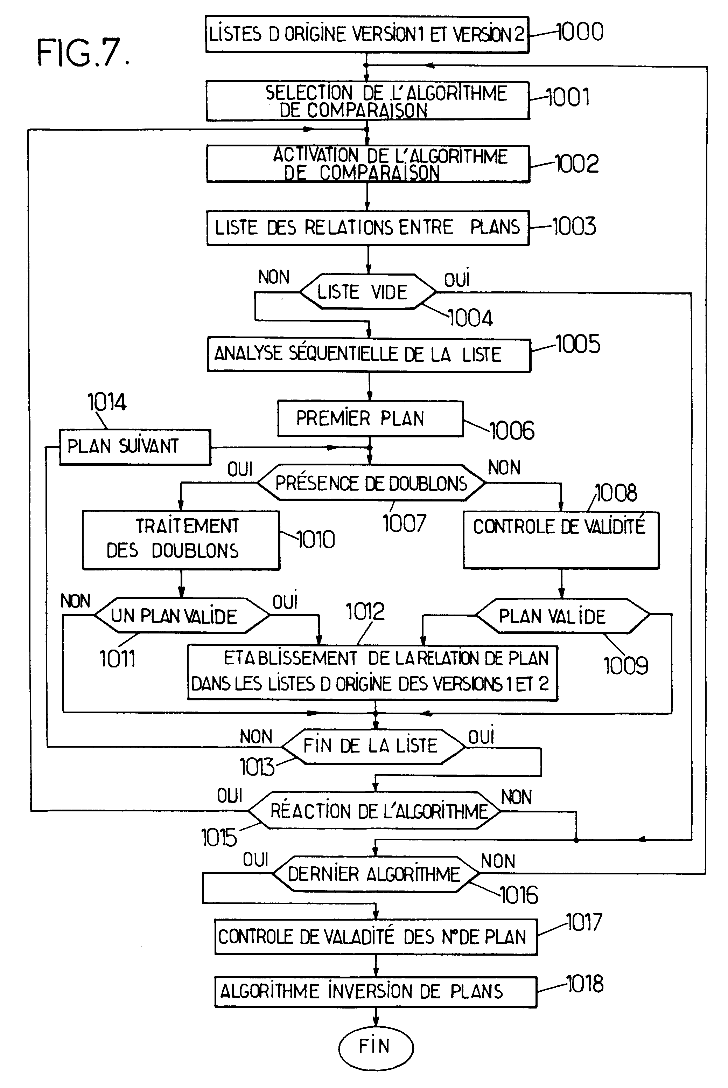

Un organigramme général relatif au déroulement de l'étape de mise en relation des plans pour deux versions monolingues VI désignées par version 1 et version 2 est donné en figure 7.

Une première étape, notée 1000, effectue l'appel des signaux d'origine relatifs à chaque version 1 et 2, ces signaux d'origine n'étant autres que les signaux correspondants représentatifs de la décomposition en plans traités, srdpt, correspondants.

Une étape 1001 permet alors de sélectionner l'algorithme de comparaison, un algorithme tel que décrit précédemment en relation avec les figures 6a à 6c par exemple. L'étape 1001 permet ainsi d'obtenir une liste séquentielle des plans susceptibles d'être mis en relation à une étape 1003, après une étape 1002 d'activation de l'algorithme de comparaison choisi. Un test 1004 relatif à l'existence d'une liste vide correspondante permet, par un test 1016 de détermination de l'appel du dernier algorithme de la bibliothèque d'algorithmes, de passer sur réponse positive au test 1016 à des étapes ultérieures qui seront décrites ci-après dans la description, et sur réponse négative à ce même test, un retour à l'étape 1001 de sélection de l'algorithme de comparaison.

Sur réponse négative au test 1004, la liste obtenue suite à la mise en oeuvre de l'étape 1003 n'étant pas vide, une étape 1005 est prévue d'analyse séquentielle de la liste, plan par plan, ainsi que décrit précédemment dans la description.

La mise en relation plan par plan peut par exemple, ainsi que représenté en figure 7, comprendre une étape d'appel 1006 du premier plan de la version 1, par exemple, prise comme référence, et de la mise en oeuvre de la procédure de détermination sur la fenêtre de recherche de coïncidence de tous les plans de la fenêtre de recherche de la version 2. L'étape 1006 précitée est suivie d'une étape 1007 de détermination de la présence de doublons, c'est-à-dire de la mise en coïncidence, dans la fenêtre de recherche actuelle, de deux plans de la version 2 avec un plan de la version 1.

Sur présence négative au test 1007, une étape 1008 de contrôle de validité des numéros de plans est prévue, celle-ci étant suivie d'une étape 1009 de contrôle de validité du plan, par exemple au moyen du processus de mise en oeuvre de signature précédemment décrit dans la description. Sur réponse positive au test 1009, celui-ci est suivi d'une étape d'établissement de la relation de plans dans les listes d'origine des versions 1 et 2. Les deux plans mis en coïncidence sont alors considérés en relation.

Sur réponse positive au test 1007, une étape 1010 de traitement des doublons est prévue. Sur réponse positive à un test 1011 de validité du plan est réalisée l'étape 1012 précédemment décrite d'établissement de la relation de plans dans les listes d'origine des versions 1 et 2. Une réponse négative aux tests 1009 et 1011 de validité du plan permet d'appeler, ainsi qu'à la suite de l'étape 1012 précitée, un test 1013 de fin de liste, une réponse négative au test 1013 permettant le retour au plan suivant de la version de référence, c'est-à-dire la version 1, par l'étape 1014 et le retour à la phase de mise en relation des plans. Une réponse positive au test 1013 de fin de liste permet d'appeler un test 1015 de réactivation de l'algorithme. Sur réponse positive au test 1015, un retour à l'étape 1002 d'activation de l'algorithme de comparaison est prévu, alors que sur réponse négative à ce même test 1015 est prévu le passage à l'étape de test 1016 de dernier algorithme précédemment cité dans la description. La réponse positive au test 1016 précité permet le passage à une étape 1017 de contrôle de validité des numéros de plans et ensuite à une étape 1018 d'algorithme d'inversion de plans, suivie elle-même d'une étape de fin.

Une description plus détaillée de l'étape de contrôle de validité des numéros de plans sera donnée ci-après.

Les plans mis en relation avec des algorithmes ayant des contraintes d'égalité plus faibles nécessitent un contrôle de validité afin de ne pas lier des plans de contenu différent. Ce contrôle est réalisé par l'analyse des numéros de plans nouvellement mis en relation par rapport aux plans voisins précédemment identifiés. A titre d'exemple non limitatif, la mise en relation de plans des version 1 et version 2 est reconnue valide si le numéro de plan dans chacune des deux versions est encadré par deux numéros de plans plus petits et par deux numéros de plans plus grands.

Le contrôle de validité des numéros de plans vis-à-vis de leur environnement exclut en fait la faculté de mise en relation de plans inversés. En conséquence, un traitement particulier gère l'inversion de plans, ce traitement étant mis en oeuvre à la fin de la phase mise en relation de plans à l'étape 1018 d'algorithme inversion de plans. Par cette étape, les plans mis en relation dont le numéro ne suit pas l'ordre logique de numérotage de plans sont retirés de la liste des plans. L'étape 1010 de traitement des doublons est appelée lorsque à un plan de la version 1, dite version de référence, on peut établir une relation avec deux ou plusieurs plans de la version 2. L'indétermination quant au plan probable à associer au plan de la version 1 peut dans la majorité des cas être levée grâce à l'analyse des numéros de plans voisins.

Un exemple de signaux ou listes obtenus à l'issue de la phase de mise en relation de plans entre versions est donné avec les tableaux 6 et 7 suivants :

- TABLEAU 6

| VERSION 1 : LISTE DES PLANS DES VERSIONS 2, 3, 4 ET 5 MIS EN RELATION AVEC LES PLANS DE LA VERSION 1. | | | | | | |
|---|---|---|---|---|---|---|
| N°PLAN VERS.1 | DUREE | TRANS | N°PLAN VERS.2 | N°PLAN VERS. 3 | N°PLAN VERS. 4 | N°PLAN VERS.5 |
| 1 | 100 | 0 | 1 | 1 | | |
| 2 | 53 | 0 | 2 | 2 | | |
| 3 | 125 | 0 | 3 | 3 | | 6 |
| 4 | 234 | 2 | 4 | 4 | 4 | 7 |
| 5 | 45 | 0 | 5 | 5 | 5 | 8 |
| 6 | 34 | 0 | 6 | 6 | 6 | 9 |
| 7 | 567 | 0 | 7 | 7 | | 10 |
| 8 | 41 | 4 | 8 | 8 | 8 | |
| 9 | 12 | 5 | 9 | 9 | | |
| 10 | 32 | 0 | 10 | 10 | 10 | 11 |
| 11 | 267 | 0 | 11 | 11 | 11 | 12 |
| 12 | 672 | 1 | 12 | 12 | 12 | 13 |
| 13 | 89 | 1 | 13 | 13 | 13 | 14 |
| - Tous les plans des versions 2 et 3 ont pu être mis en relation avec tous les plans de la version 1. <br> - Les plans 1, 2, 3, 7 et 9 de la version 4 n'ont pu être mis en relation avec ceux de la version 1. <br> - Les plans 1, 2, 3, 4 et 5 de la version 5 n'ont pu être mis en relation avec ceux de la version 1. <br> - Les plans 8 et 9 de la version 1 ne sont pas présents dans la version 5 (coupure). | | | | | | |

- TABLEAU 7

| VERSION 5 : VUE PARTIELLE DES PLANS DE LA VERSION 5 | | | | |
|---|---|---|---|---|
| N°PLAN VERS.5 | DUREE | TRANS | N°PLAN VERS.1 | INDICATEUR ALGORITHME UTILISE |
| 1 | 23 | 0 | | |
| 2 | 112 | 0 | | |
| 3 | 15 | 0 | | |
| 4 | 12 | 2 | | |
| 5 | 65 | 0 | | |
| 6 | 125 | 0 | 3 | 2 plans égalité stricte |
| 7 | 234 | 2 | 4 | 3 plans égalité stricte |
| 8 | 45 | 0 | 5 | 3 plans égalité stricte |
| 9 | 34 | 0 | 6 | 3 plans égalité stricte |
| 10 | 565 | 1 | 7 | 2 plans égal.très proche |
| 11 | 35 | 0 | 10 | 2 plans égalité proche |
| 12 | 269 | 0 | 11 | 3 plans égal.très proche |
| 13 | 672 | 1 | 12 | |

Pour l'essentiel, chaque fichier, un par version, contient la liste des plans mis en relation entre la version considérée et les autres versions.

Enfin, la phase finale du logiciel chargé dans le calculateur 20 permet d'aboutir à la phase génération de la liste séquentielle des plans sans relation établie de façon définitive, c'est-à-dire de la liste des plans qu'il n'a pas été possible de mettre en coïncidence.

La phase finale permet maintenant de déterminer la différence de durée existant entre ces plans pour établir un nouveau fichier, lequel permettra d'engendrer le signal spsv de la figure 5a, ou liste séquentielle des plans sans relation établie de façon définitive.

Pour les plans mis en relation, la différence de durée entre deux plans est :

$$\Delta = (\text{DUREE} + \text{TRANS}) \text{ de V2} - (\text{DUREE} + \text{TRANS}) \text{ de V1}.$$

Le calcul de durée est conduit en fonction de l'algorithme de mise en relation de plans utilisé :

- algorithme avec critère d'égalité stricte : $\Delta = 0$,
- algorithme avec critère d'égalité très proche ou proche :
  $\Delta$ est calculé selon la relation précitée.

Pour un algorithme somme, le calcul de $\Delta$ est étendu aux deux ou trois plans composant la somme.

Enfin pour les plans non identifiés, la différence de durée est calculée sur chaque suite de plans non mis en relation par soustraction des codes temporels réels extrêmes.

Le signal spsv ou fichier correspondant précédemment décrit peut alors être utilisé pour réaliser, au moyen du module 4 représenté en figure 5a, une composition du programme cohérent pour l'ensemble des sources image et son des versions monolingues VI précitées.

L'utilisation conforme à l'objet de la présente invention sera décrite en vue de réaliser la composition de programmes télévisés à récit multilingue par composition de L programmes à récit monolingue attributs d'images vidéo communes d'un même programme.

Dans une telle utilisation, l'opération de post-composition consiste, à partir des différentes versions VI constituées par le signal vidéo ViVI relatif à la version VI, et un signal audio correspondant noté AuVI, ainsi que d'une trame de composition constituée en fait par le signal spsv et d'une des versions prises comme version de référence, la version 1 par exemple, à effectuer une post-synchronisation vidéo entre les signaux vidéo de la version de référence et de chaque autre version.

Deux plans, ou groupes de plans, P1, PI, avec $1 \neq 1$ de la version de référence et de la version soumise à synchronisation sont synchrones lorsque la différence de durée des deux plans, ou groupes de plans, mis en relation est nulle.

Le plan post-synchronisé est obtenu par sélection et mémorisation de l'un des signaux vidéo correspondants, c'est-à-dire des signaux AuV1, AuVI, avec $I \neq 1$. Ces signaux étant synchronisés respectivement sur leur version correspondante, y compris leur information sonore. Un tel mode opératoire permet de constituer L-1 couples de versions post-synchronisées.

Une comparaison deux à deux de la différence de durée des couples de plans post-synchronisés est effectuée pour déterminer, par intersection, les plans qui ne nécessitent aucune intervention. Une illustration analogique de la détermination de ces plans ne nécessitant aucune intervention est donnée dans le tableau ci-après :

- TABLEAU 9

| N°PLAN VERS. 1 | DIFFER.DUR VERS2-VERS1 | DIFFER.DUR VERS3-VERS1 | DIFFER.DUR VERS4-VERS1 | DIFFER.DUR VERS5-VERS1 |
|---|---|---|---|---|
| 1 | 0 | 0 | | 0 |
| 2 | 0 | 0 | 0 | -1 |
| 3 | 0 | 0 | 0 | 0 |
| 4 | 0 | 0 | 0 | 0 |
| 5 | 0 | | 0 | 5 |
| 6 | 0 | 0 | -1 | 3 |
| 7 | 0 | 0 | 0 | 0 |
| 8 | 0 | 0 | 0 | 0 |
| 9 | 0 | 0 | 0 | 0 |
| 10 | 0 | 0 | 234 | 0 |

Les différences de durée très faibles entre plans, inférieures à 10 images par exemple, peuvent alors être compensées par un traitement d'expansion ou de compression temporelle du signal audio, AuVI, et les différences plus importantes peuvent être compensées, soit par suppression du signal audio de durée la plus grande, soit par intervention externe par un opérateur humain.

Le mode opératoire du module 4 précédemment décrit est ainsi rendu totalement automatique bien que maintenu, le cas échéant, à l'initiative de l'opérateur humain.

Bien entendu, l'intervention manuelle d'un opérateur humain est utile lorsque la synchronisation entre versions n'a pu être totalement effectuée en mode automatique.

Ces opérations d'intervention manuelle peuvent consister, au moyen de visionnage et d'écoute, à valider des propositions de synchronisation lorsque des suites de plans n'ont pu être mises en relation, mais ont des différences de durée faibles, à choisir des modes de synchronisation lorsque des plans ont été mis en relation, mais ont des différences de durée importantes, à résoudre des cas individuels de plans non mis en relation, par exemple dans le cas d'un plan manquant sur une version, ou des problèmes à caractère purement artistique.

Le module 4 délivre en sortie un signal constitué par un fichier informatique formant le produit final, ce fichier étant représentatif du montage déterminé de façon automatique ou semi-automatique, au choix de l'utilisateur, par le programme de traitement. Ce fichier compatible avec le format de la machine de montage, non représentée au dessin, contient la liste séquentielle des codes temporels des plans des versions à synchroniser.

L'opérateur humain édite alors cette liste, et peut en valider ou en modifier les ordres de montage. Une telle liste comprend les plans dont la différence de durée est importante, les plans qui n'ont pu être mis en relation, et les plans dont la solution de synchronisation automatique nécessite une validation.

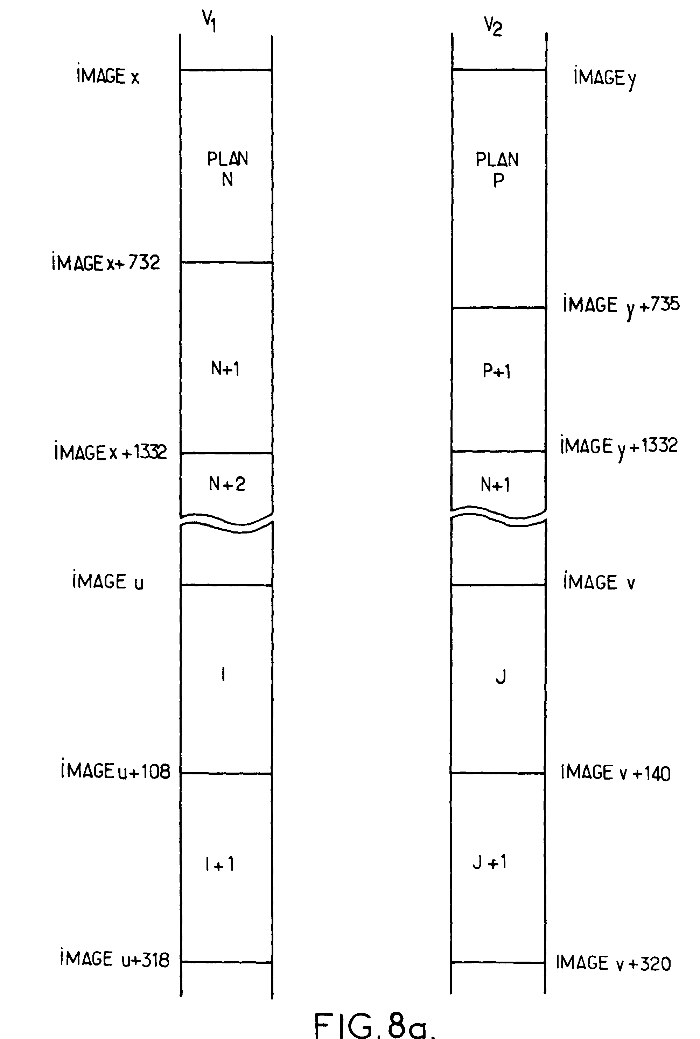

Une variante avantageuse d'un processus de synchronisation de différentes versions linguistiques monolingues sera décrite en liaison avec les figures 8a à 8c.

Une telle variante permet de tenir compte des caractéristiques artistiques et techniques de l'oeuvre elle-même. Sur les figures 8a à 8c on désigne à titre d'exemple non limitatif par V1 et V2 deux versions monolingues distinctes à synchroniser, la version V1 servant de référence par exemple et la version V2 constituant en fait la version à comparer et synchroniser.

La grande diversité des situations et l'impossibilité d'évaluer a priori les conséquences subjectives des actions de synchronisation limitent la capacité d'automatisation de celles-ci. Des expérimentations ont cependant montré que, le plus souvent, les différences de durée résultent de coupures en début ou en fin de plan, qu'elles se compensent exactement, et donc s'annulent, ou bien qu'elles sont considérablement réduites par le regroupement de plusieurs plans consécutifs. Les actions automatiques pour chaque choix possible de synchronisation correspondante peuvent alors être introduites dans la liste des différentes solutions applicables, des indicateurs ou commentaires destinés à renseigner l'opérateur pouvant être introduits. Ainsi ce dernier peut disposer d'une assistance pour l'essai de différentes solutions. Il peut choisir d'en valider une ou aucune et peut décider alors, si aucune n'est satisfaisante, d'effectuer le travail en mode manuel.

D'une manière non limitative, les solutions précitées peuvent consister à effectuer soit une mise en coïncidence en début de plan, avec conservation du plan le plus court et coupure du plan le plus long en fin de plan, soit une mise en coïncidence en fin de plan avec conservation du plan le plus court et coupure du plan le plus long en début de plage, soit une conservation de la totalité de plans, la mise en coïncidence en début et en fin de plan pouvant être obtenue par un traitement de l'une des versions, traitement tel que par exemple lecture à vitesse différente variable pour des écarts dont la durée n'excède pas 4 % de la durée du plan, soit une association de plans consécutifs, dont la durée globale présente une différence nulle ou au plus égale à la durée de quelques images, dix images, par exemple, par suite des compensations inter-plans des écarts.

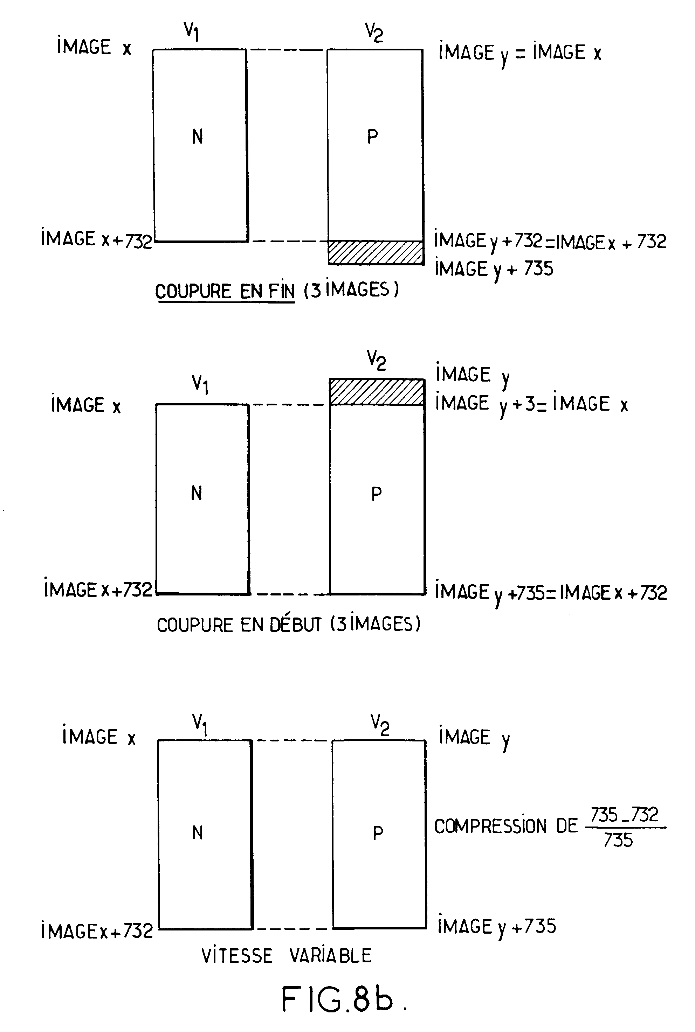

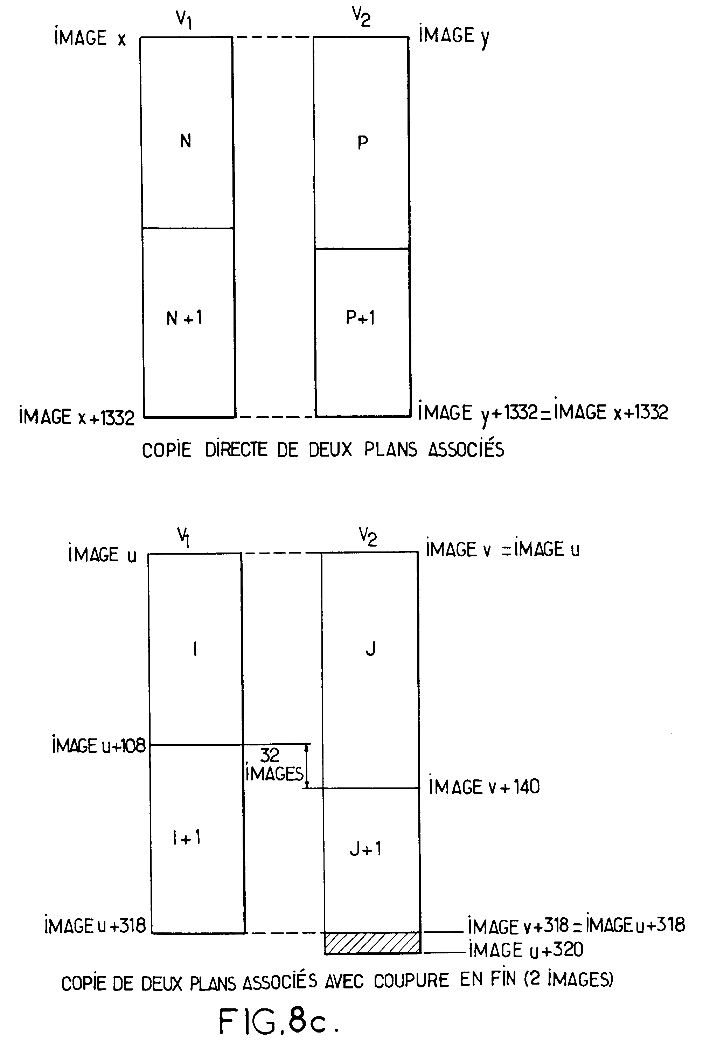

Les différentes solutions sont représentées à partir des deux versions monolingues V1 et V2 précitées, dont les coïncidences les plus probables ont été établies et mises en évidence conformément à l'objet de l'invention, ainsi que représenté en figure 8a. La figure 8b représente schématiquemment la mise en oeuvre des trois premières solutions précédemment mentionnées de coupure en fin, coupure en début et de lecture à vitesse variable. Les numéros d'images sont arbitraires et donnés à titre purement illustratif, le taux de compression 3/735 pouvant correspondre à un cas réel. Enfin la figure 8c représente schématiquement deux types de montage par association de plans avec une copie directe de deux plans associés respectivement une copie de deux plans associés et coupure de deux images en fin de plan.

On a ainsi décrit un système d'analyse vidéo du montage d'un programme télévisé diffusé ou enregistré, sous forme d'une succession d'images, particulièrement performant dans la mesure où ce système et son utilisation permettent une automatisation complète de la détermination des changements de plans intervenant dans un programme pour l'élaboration et la synchronisation de diverses données d'accompagnement de programmes, tels que recadrage 16/9-4/3, introduction de sous-titres, ou de divers processus de post-production de films, ou d'enregistrements vidéo tels que colorisation de films noir et blanc, par exemple. Le système objet de la présente invention et son utilisation permettent également la réalisation de travaux de post-production tels que processus de post-synchronisation de films pour élaboration de programmes de télévision multilingues à partir d'archives doublées considérées comme des versions correspondantes monolingues.

En outre, le système objet de la présente invention et son utilisation permettent également d'assurer une assistance aux opérations de contrôle de durée de diffusion d'émissions sur des enregistrements parallèles à l'émission antenne, tels que contrôle de conformité du cahier des charges des sociétés de programmes, conformité des temps de diffusion des spots publicitaires, ou de temps de paroles lors de campagnes électorales, par exemple.

**Revendications**

1. Système d'analyse vidéo du montage d'un programme télévisé diffusé ou enregistré sous forme d'une sucession d'images, chaque image étant diffusée ou enregistrée sous forme de données audio- et vidéo-fréquence associées à l'image d'ordre k considéré et d'un code temporel associé représentatif de ladite image, ce système comprenant des moyens de mesure de l'évolution temporelle de la succession des images, par détermination, entre deux images successives d'ordre k-1,k d'un signal différence d'image, caractérisé en ce que qu'il comprend en outre :

   - des moyens (105,106) de détermination, à partir dudit signal différence d'image Sd(i,j,k) calculé pour chaque échantillon de l'image, de paramètres correspondants représentatifs de l'activité scénique (ias) du programme diffusé ou enregistré pour un groupe d'au moins deux images successives d'ordre k-1,k, et
   - des moyens (11) d'analyse du programme diffusé ou enregistré permettant à partir desdits paramètres correspondants représentatifs de ladite activité scénique (ias), d'établir des données représentatives du découpage en plans, constitués d'un groupe de p images successives, dudit programme télédiffusé ou enregistré.

2. Système selon la revendication 1, caractérisé en ce que lesdits moyens (10) de mesure de l'évolution temporelle de la composition des images comportent :

   - des moyens (100, 102) de mémorisation de la composante vidéo S(i,j,k) du signal d'image où i désigne l'indice de l'échantillon de composante dans la ligne active de l'image considérée, j désigne l'indice de ligne active dans l'image considérée et k désigne le numéro d'ordre de l'image analysée considérée, et des moyens (100, 101, 102) de mémorisation de la composante S(i,j,k-1) du signal d'image de l'image d'ordre antérieur k-1 considéré;
   - des moyens (103) de calcul du signal différence d'image vérifiant la relation :

$$Sd(i,j,k) = A \cdot [S(i,j,k) - S(i,j,k-1)] + Sm$$

   où

   A représente un coefficient de pondération de valeur ou une fonction déterminée,
   Sm représente un coefficient de correction fonction de la dynamique admissible pour la composante S(i,j,k) considérée.

3. Système selon la revendication 1 ou 2, caractérisé en ce que lesdits moyens (10) de mesure de l'évolution temporelle de la composition des images comportent en outre:

   - des moyens (105) de calcul, pour une image d'ordre k, à partir dudit signal différence d'image Sd(i,j,k) d'un histogramme HSd(k) du nombre d'occurences de chaque niveau d'amplitude du signal différence d'image Sd(i,j,k),
   - des moyens (106) de calcul de paramètres correspondants d'activité scénique par comparaison de la distribution du spectre de chaque histogramme HSd(k) à une pluralité de distributions ou gabarits de référence représentatives d'activités scéniques correspondantes.

4. Système selon la revendication 3, caractérisé en ce que lesdits moyens (105) de calcul, pour une image d'ordre k, à partir du signal différence Sd(i,j,k) ou du signal différence filtré, d'un histogramme HSd(k) comportent :

   - un circuit d'interface d'entrée recevant le signal différence filtré $\widehat{Sd}$(i,j,k), ledit circuit d'interface délivrant des signaux de référence temporelle (srt), des signaux de données vidéo (sdv) et des signaux d'horloge (clk).
   - un circuit générateur de signaux de service recevant, d'une part, lesdits signaux de référence temporelle (srt) et, d'autre part, lesdits signaux d'horloge (clk), et délivrant des signaux de service (ss),
   - un circuit de triage des signaux de données vidéo (sdv) selon une loi de répartition d'histogramme par niveaux de quantitification vidéo déterminés, ledit circuit de triage recevant, d'une part, lesdits signaux de données vidéo (sdv) et, d'autre part, des signaux de séquencement (slb) et délivrant des signaux de données vidéo triés par niveau (sdvtn),

- une pluralité de registres de mémorisation, chaque registre formant une banque de valeurs de niveaux triés, destinée à recevoir et à mémoriser lesdits signaux de données vidéo triés par niveau (sdvtn) en fonction de leur niveau,
- un circuit additionneur de décompte dans chaque banque du nombre d'occurences des niveaux d'amplitude des signaux vidéo triés, relié par une liaison par BUS en lecture (L) et en écrite (E) à chacun desdits registres formant banque, ledit circuit additionneur délivrant après lecture et décompte de chaque banque, un signal de décompte de banques (sdb) représentatif, pour chaque banque correspondante, du nombre d'occurences des niveaux d'amplitude des signaux de données vidéo (sdv) triés, relatifs au signal Sd(i,j,k) considéré.

5. Système selon la revendication 3 ou 4, caractérisé en ce que lesdits moyens de calcul (106) de paramètres correspondants d'activité scénique comportent :

- une unité de séquencement microprogrammée recevant le signal de référence temporelle (srt) et délivrant un signal de lecture de banque (slb),
- un registre tampon interconnecté par le BUS de lecture (L) à chacun desdits registres formant une banque, ledit registre tampon comprenant, d'une part, un circuit mémoire auxiliaire permettant de mémoriser le signal de décompte de banque (sdb(0,1,2,3)) relatif à chaque banque et, d'autre part, une table de conversion, ladite table de conversion délivrant à partir du signal de décompte de banque un signal indicateur d'activité scénique (ias) pour le couple d'images successives d'ordre k-1,k considéré.

6. Système selon l'une des revendications 4 ou 5, caractérisé en ce que, auxdites banques de valeur de niveau trié sont affectées des valeurs symétriques par rapport au niveau de valeur d'amplitude correspondant à celui de la luminance moyenne, à une première banque étant affectée une plage continue de valeurs symétriques par rapport audit niveau d'amplitude de la luminance moyenne, et à chacune des autres banques étant affectées deux plages de valeurs disjointes de valeurs symétriques par rapport audit niveau d'amplitude de la luminance moyenne, le spectre de l'histogramme HSd(k) étant exprimé par les signaux de décompte de banque (sdb(0,1,2,3)) relatifs à la banque considérée.

7. Système selon la revendication 4, 5 ou 6, caractérisé en ce que lesdits signaux de décompte de banque sdb (0,1,2,3) sont quantifiés sur un nombre NAS de niveaux d'activité scénique, de façon à définir, pour chaque banque, un niveau d'activité scénique élémentaire quantifié, nase(0,1,2,3), l'ensemble des signaux de niveau d'activité scénique élémentaire quantifiés formant ledit indicateur d'activité scénique, (ias).

8. Système selon la revendication 6 ou 7, caractérisé en ce que, à ladite première banque, étant associée :

- une deuxième banque à laquelle sont affectées deux plages de valeurs disjointes de valeurs symétriques, ces deux plages étant elles-mêmes adjacentes à la plage de valeurs centrales associée à la première banque,
- une troisième banque à laquelle sont affectées deux plages de valeurs disjointes de valeurs symétriques, ces deux plages étant elles-mêmes adjacentes respectivement aux deux plages de valeurs disjointes associées à la deuxième banque, et
- une quatrième banque à laquelle sont affectées deux plages de valeurs disjointes de valeurs symétriques, ces deux plages étant elles-mêmes adjacentes respectivement aux deux plages de valeurs disjointes associées à la troisième banque, ledit indicateur d'activité scénique (ias) est représentatif de l'absence d'activité scénique, d'une activité scénique faible, d'une activité scénique moyenne et d'une activité scénique forte,
- l'absence d'activité scénique étant définie par un niveau d'activité scénique élémentaire, relatif à la première banque, supérieur à la valeur moyenne NAS/2 des niveaux d'activité scénique nase(0) $\geq$ NAS/2, le niveau d'activité scénique élémentaire relatif aux deuxième, troisième et quatrième banques étant sensiblement nul, nase(1,2,3)=0,
- l'activité scénique faible étant définie par un niveau d'activité scénique élémentaire relatif à la première banque supérieur à la valeur moyenne NAS/2 des niveaux d'activité scénique, nase(0) $\geq$ NAS/2, le niveau d'activité scénique élémentaire relatif à la deuxième banque étant inférieur à 1, nase(1) $\leq$ 1 et le niveau d'activité scénique élémentaire relatif à la troisième et à la quatrième banques étant sensiblement nul, nase(2)=nase(3) = 0,
- l'activité scénique moyenne étant définie par un niveau d'activité scénique élémentaire relatif à la première banque supérieur à la valeur moyenne NAS/2 des niveaux d'activité scénique, nase(0) $\geq$ NAS/2, le niveau d'activité scénique élémentaire relatif à la deuxième et à la troisième banque étant inférieur ou égal à un, nase(1) $\leq$ 1, et nase(2) $\leq$ 1, et le niveau d'activité scénique élémentaire relatif à la quatrième banque étant sensiblement nul, nase(3) = 0,

- l'activité scénique forte étant définie par un niveau d'activité scénique élémentaire relatif à la première banque inférieur ou égal à la valeur moyenne NAS/2 des niveaux d'activité scénique nase(0) $\leq$ NAS/2, ou par un niveau d'activité scénique élémentaire relatif à la quatrième banque, supérieur ou égal à la valeur moyenne NAS/2 des niveaux d'activité scénique, nase(3) $\geq$ NAS/2.

**9.** Système selon l'une des revendications précédentes, caractérisé en ce que lesdits moyens d'analyse du programme diffusé, à partir dudit signal différence et des paramètres représentatifs de l'activité scénique comportent :

- des moyens calculateurs (110) interconnnectés auxdits moyens de mesure de l'évolution temporelle de la composition des images, lesdits moyens calculateurs permettant une mémorisation desdits paramètres d'activité scénique, lesdits moyens calculateurs comprenant :
- un logiciel de discrimination permettant de sélectionner les images d'ordre k considéré ou les groupes de p images dont les paramètres d'activité scénique sont supérieurs à une ou plusieurs valeurs de seuil déterminées, ce qui permet d'établir des données temporelles et/ou cardinales représentatives du découpage en plans, constitués de p images constitutives successives dudit programme télévisé diffusé ou enregistré.

**10.** Système selon la revendication 9, caractérisé en ce que lesdits moyens calculateurs (110) recoivent en entrée :

- un signal de code temporel (ct) représentatif de la succession de chaque image d'ordre k constitutives du programme diffusé,
- un signal indicateur d'activité scénique (ias) représentatif des paramètres d'activité scénique pour deux images successives d'ordre k-1, k, ledit signal étant délivré par lesdits moyens de mesure de l'évolution temporelle de la composition des images,
- un signal de synchronisation des échanges (se) permettant une acquisition à la fréquence image par lesdits moyens calculateurs des données correspondant audit signal de code temporel, et audit signal d'activité scénique, ledit logiciel de discrimination permettant sur critère de discrimination de l'indicateur d'activité scénique de toute image d'ordre k ou groupe de p images d'ordre k-(p-1),k de déterminer les points de montage dudit programme, correspondant à deux plans successifs, P-1, P, ledit critère de discrimination étant établi par rapport à trois plans types d'activité scénique remarquable, un premier plan type désigné par plan sec, tel que passage d'un personnage à un autre personnage en situation de dialogue, présentant une activité scénique à variation temporelle brusque, un deuxième plan type, désigné par plan de fondu enchaîné, présentant une activité scénique à transition temporelle sensiblement linéaire, et un troisième plan type, désigné par plan d'incrustation, présentant une variation temporelle d'activité scénique de type impulsionnel, lesdits moyens calculateurs délivrant un signal représentatif, pour le programme diffusé correspondant, de son découpage en plans, signal (srdp), chaque plan de rang P étant défini par un code temporel de début, un code temporel de fin.

**11.** Utilisation d'un système d'analyse vidéo du montage d'un programme télévisé diffusé ou enregistré sous forme d'une succession d'images selon l'une des revendications 1 à 10 précédentes, pour remplacer les étapes de recherche par visionnage des points de montage des programmes ou parties de programmes au cours de travaux de post-production de films cinéma ou vidéo ou de contrôle de conformité du montage ou diffusion du produit final, ou la composition de programmes télévisés à récit multilingue.

**12.** Utilisation d'un système d'analyse vidéo du montage d'un programme télévisé diffusé ou enregistré sous forme d'une succession d'images selon la revendication 11, caractérisée en ce que, en vue de réaliser une composition de programmes télévisés à récit multilingue par post-composition de programmes à récit monolingue, attributs d'images vidéo communes d'un même programme, ladite utilisation consiste:

- à effectuer une étape d'analyse de chaque programme monolingue pour établir les données représentatives du découpage en plans constitués d'un groupe de pl images successives, où pl désigne, pour la version monolingue Vl considérée, le nombre d'images constitutives d'un plan Pl considéré ;
- à établir une corrélation systématique entre les différents plans Pl de chaque version monolingue constitués d'un nombre déterminé pl d'images successives pour chaque version monolingue Vl considérée, afin d'établir une cohérence temporelle entre tous les plans Pl de chaque version monolingue et chaque récit monolingue, ladite corrélation permettant de retenir les données temporelles et/ou cardinales en nombre d'images successives pl constitutives d'un plan Pl donné minimales et maximales permettant de supporter tous les récits monolingues considérés ;
- à mémoriser sous forme vectorielle (Pml, Plt, plt), lesdites données de façon à constituer une trame de composition ou de montage du programme multilingue dans laquelle, à l'ordre des plans Pml pouvant rentrer dans la composition du programme multilingue final est associé, pour chaque version monolingue considérée, l'ordre du plan Plt, le nombre d'images successives plt et les données temporelles de début et de fin du plan Plt considéré.

13. Utilisation selon la revendication 12, caractérisée en ce que ladite étape d'analyse de chaque programme monolingue comprend, à partir du signal représentatif du découpage en plans (srdp) obtenu pour chaque version monolingue Vl :

- une étape de filtrage complémentaire dudit signal représentatif du découpage en plans (srdp) pour engendrer un signal représentatif du découpage en plans filtré ($\widehat{srdp}$) correspondant,
- une étape de calcul de la durée des plans (DUREE) et des plans de transition (TRANS) par soustraction des codes temporels (ct) successifs,
- une étape de calcul et d'attribution, au premier plan de chaque version monolingue Vl, d'un code temporel virtuel (TCIV) de valeur arbitraire et, par récurrence, pour chaque plan Pl successif ultérieur, un code temporel virtuel vérifiant la relation :

$$TCIV(PI) = TCIV(PI-1) + DUREE(PI-1) + TRANS(PI-1),$$

- une étape de création d'un signal représentatif du découpage en plans traité pour la version monolingue considérée (srdpt), ledit signal permettant l'identification de chaque plan Pl et contenant, outre le code temporel réel,

  . un code temporel virtuel,
  . un numéro de plan,
  . une durée,
  . une durée du plan de transition associé.

14. Utilisation selon la revendication 12 ou 13, caractérisée en ce que pour un nombre L de versions monolingues, ladite corrélation est effectuée par groupe de deux versions monolingues, la corrélation entre plans successifs Pl, Pl+1 de deux versions monolingues Vl, Vl+1 étant effectuée par analyse comparative de la durée et/ou du nombre correspondant d'images pl, pl+1 pour les plans considérés, ou d'une combinaison linéaire desdites durées ou desdits nombres d'images successives, sur un nombre prédéterminé de plans successifs Pl, P+1,l, ...P+r,l ; Pl+1, P+1,l+1, ...P+r,l+1 de l'une et l'autre version monolingue considérée.

15. Utilisation selon l'une des revendications 12 et 13, caractérisée en ce que ladite étape d'établissement d'une corrélation systématique entre les plans Pl de chaque version monolingue consiste, à partir dudit signal représentatif du découpage en plan traité (srdpt), à effectuer une mise en relation plan à plan entre deux versions monolingues Vl, Vl+1, par comparaison de la durée (DUREE) de leurs plans correspondants, Pl P+r,l+1, ladite comparaison étant effectuée par enchaînement d'étapes élémentaires de comparaison sur critère de contrainte d'égalité des durées de plan (DUREE) et/ou des durées de transition (TRANS) plus ou moins stricte, ladite comparaison étant effectuée, pour chaque comparaison élémentaire, sur une fenêtre de recherche constituant pour un plan Pl d'ordre P de la version Vl, un environnement réduit de plans Pl+1 à P+sl+1, de la version Vl+1, la mise en relation de deux plans Pl, respectivement P+sl+1, des deux versions Vl, Vl+1 étant immédiatement suivie d'un recalage relatif du code temporel virtuel TCIV le plus faible des deux versions Vl, Vl+1 considérées, le code temporel virtuel des plans suivants de la version dont le code temporel virtuel a été réactualisé étant également réactualisé, jusqu'à la reconnaissance d'un code temporel virtuel déjà réactualisé.

16. Utilisation selon la revendication 12 ou 14, caractérisée en ce que, en vue de réaliser ladite composition de programmes télévisés à récit multilingue par post-composition de L programmes à récit monolingue attributs d'images vidéo communes d'un même programme, ladite opération de post-composition consiste, à partir des différentes versions Vl, constituées par un signal vidéo ViVl et un signal audio correspondant AuVl de ladite trame de composition, et d'une des versions prises comme version de référence, V1, à effectuer une post-synchronisation vidéo entre les signaux vidéo de ladite version de référence et de chaque autre version, deux plans, ou groupes de plans, P1, Pl, avec l ≠ 1, de la version de référence et de la version soumise à synchronisation étant synchrones lorsque la différence de durée des deux plans, ou groupes de plans, mis en relation est nulle, le plan post-synchronisé étant obtenu par sélection et mémorisation de l'un des signaux vidéo correspondant des signaux audio

EP 0 540 403 B1

correspondants AuVl, AuVl, synchronisés respectivement sur leur version correspondante, de façon à constituer L-1 couples de versions post-synchronisées,

- à effectuer une comparaison deux à deux de la différence de durée des couples de plans post-synchronisés pour déterminer par intersection les plans qui ne nécessitent aucune intervention,
- à compenser les différences de durée, très faibles, inférieures à un nombre déterminé d'images, par un traitement d'expansion ou de compression temporelle du signal audio AuVl, les différences du durée plus importantes pouvant être compensées, soit par suppression du signal audio de durée la plus grande, soit par intervention externe.

17. Utilisation selon l'une des revendications 15 ou 16, caractérisée en ce que la mise en relation plan à plan de chaque version monolingue consiste à effectuer soit

- une mise en coïncidence en début de plan, avec conservation du plan le plus court et coupure de plan le plus long en fin de plan, soit
- une mise en coïncidence en fin de plan avec conservation du plan le plus court et coupure du plan le plus long en début de plage, soit
- une conservation de la totalité des plans, la mise en coïncidence en début et en fin étant obtenue par traitement d'une des versions monolingues, soit
- une association de plans consécutifs dont la durée globale présente une différence nulle ou au plus égale à la durée de quelques images.

**Patentansprüche**

1. Videoanalyseverfahren für die Montage eines als Aufeinanderfolge von Bildern übertragenen oder aufgezeichneten Fernsehprogramms, wobei jedes Bild in Form von Ton- oder Bildfrequenzdaten, die dem jeweils betreffenden Bild von der Ordnung k zugeordnet sind, sowie eines zugeordneten und für dieses Bild repräsentativen Zeitkode übertragen oder aufgezeichnet wird, wobei das System Mittel zum Messen des Zeitverlaufs der Aufeinanderfolge von Bildern durch Bestimmung eines Bilddifferenzsignals zwischen zwei aufeinanderfolgenden Bildern der Ordnung k-l,k aufweist, dadurch gekennzeichnet, daß es weiterhin aufweist:

- Mittel (105, 106) zum Bestimmen, auf der Grundlage des für jeden Bildabtastwert berechneten Bilddifferenzsignals Sd(i,j,k), von entsprechenden Parametern, die repräsentativ für die Szenenaktivität (ias) des übertragenen oder aufgezeichneten Programms für eine Gruppe von mindestens zwei aufeinanderfolgenden Bildern der Ordnung k-l,k sind, und
- Mittel (11) zum Analysieren des übertragenen oder aufgezeichneten Programms, welche es ermöglichen, auf der Grundlage der entsprechenden, für die Szenenaktivität (ias) repräsentativen Parameter, Daten zu erstellen, die repräsentativ für das Schneiden in Einstellungen sind, welche aus einer Gruppe von p aufeinanderfolgenden Bildern des übertragenen oder aufgezeichneten Programms bestehen.

2. System nach Anspruch 1, dadurch gekennzeichnet, daß die Mittel (10) zum Messen des zeitlichen Verlaufs der Zusammenstellung von Bildern aufweisen:

- Mittel (100, 102) zum Speichern der Videokomponente S(i,j,k) des Bildsignals, wobei i für den Index des Komponentenabtastwerts in der aktiven Zeile des betreffenden Bildes steht, j für den Index der aktiven Zeile in dem betreffenden Bild steht, und k für die Ordnungsnummer des betreffenden analysierten Bildes steht, und Mittel (100, 101, 102) zum Speichern der Komponente S(i,j,k-l) des Bildsignals des betreffenden Bildes der vorherigen Ordnung k-1;
- Mittel (103) zum Berechnen des Bilddifferenzsignals unter Berücksichtigung der Beziehung:

$$Sd(i,j,k) = A \cdot [S(i,j,k) - S(i,j,k-1)] + Sm$$

wobei

A für einen Wertwichtungskoeffizienten oder eine bestimmte Funktion steht,
Sm für einen Korrekturkoeffizienten in Abhängigkeit von der zulässigen Dynamik für die betreffende Komponente S(i,j,k) steht.

3. System nach Anspruch 1 oder 2, dadurch gekennzeichnet, daß die Mittel (10) zum Messen des zeitlichen Verlaufs der Zusammenstellung von Bildern des weiteren aufweisen:

- Mittel (105) zum Berechnen eines Histogramms HSd(k) der Auftretenshäufigkeit eines jeden Amplitudenpegels des Bilddifferenzsignals Sd(i,j,k) für ein Bild der Ordnung k auf der Grundlage des Bilddifferenzsignals Sd(i,j,k),
- Mittel (106) zum Berechnen von entsprechenden Parametern für die Szenenaktivität durch den Vergleich der Spektralverteilung eines jeden Histogramms HSd(k) mit einer Mehrzahl von für entsprechende Szenenaktivitäten repräsentativen Bezugsverteilungen oder -mustern.

4. System nach Anspruch 3, dadurch gekennzeichnet, daß die Mittel (105) zum Berechnen eines Histogramms HSd(k) für ein Bild der Ordnung k auf der Grundlage des Differenzsignals Sd(i,j,k) oder des gefilterten Differenzsignals aufweisen:

- eine Eingangsschnittstellenschaltung, welche das gefilterte Differenzsignal Sd(i,j,k) empfängt, wobei die Schnittstellenschaltung Zeitbezugssignale (srt), Videodatensignale (sdv) und Taktsignale (clk) ausgibt,
- eine Schaltung zum Erzeugen von Servicesignalen, welche zum einen die Zeitbezugssignale (srt) und zum anderen die Taktsignale (clk) empfängt und Service-signale (ss) ausgibt,
- eine Schaltung zum Sortieren der Videodatensignale (sdv) gemäß einer Histogrammverteilungsregel nach bestimmten Videoquantisierungspegeln, wobei die Sortierschaltung zum einen die Videodatensignale (sdv) und zum anderen sequentielle Ordnungssignale (slb) empfängt und nach Pegel sortierte Videodatensignale (sdvtn) ausgibt,
- eine Mehrzahl von Speicherregistern, wobei jedes Register eine Bank von sortierten Pegelwerten darstellt, welche dazu vorgesehen ist, die nach Pegel sortierten Videodatensignale (sdvtn) in Abhängigkeit von ihrem Pegel zu speichern,
- eine Addierschaltung zum Abzählen der Auftretenshäufigkeit der Amplitudenpegel der sortierten Videosignale in jeder Bank, welche über eine Lese (L)-und Schreib (E)-Busverbindung mit jedem der eine Bank bildenden Register verbunden ist, wobei die Addierschaltung nach dem Lesen und Abzählen jeder Bank ein Bankenzählsignal (sdb) ausgibt, das für jede entsprechende Bank repräsentativ für die Auftretenshäufigkeit der Amplitudenpegel der sortierten Videodatensignale (sdv) in Bezug auf das betreffenden Signal Sd(i,j,k) ist.

5. System nach Anspruch 3 oder 4, dadurch gekennzeichnet, daß die Mittel (106) zum Berechnen von Parametern, welche der Szenenaktivität entsprechen, aufweisen:

- eine Mikroprogramm-Einheit zum sequentiellen Ordnen, welche das Zeitbezugssignal (srt) empfängt und ein Banklesesignal (slb) ausgibt,
- ein Pufferregister, welches über den Lesebus (L) mit jedem der eine Bank bildenden Register verbunden ist, wobei das Pufferregister zum einen eine Hilfsspeicherschaltung aufweist, welche es ermöglicht, das Bankenzählsignal (sdb(0,1,2,3)) in Bezug auf jede Bank zu speichern, und zum anderen eine Konvertierungstabelle aufweist, wobei die Konvertierungstabelle auf der Grundlage des Bankenzählsignals ein Signal ausgibt, welches die Szenenaktivität (ias) für das betreffende Paar von aufeinanderfolgenden Bildern der Ordnung k-1,k angibt.

6. System nach einem der Ansprüche 4 oder 5, dadurch gekennzeichnet, daß in den Banken für den sortierten Pegelwert symmetrische Werte bezüglich des Amplitudenwertpegels abgelegt sind, welche demjenigen der mittleren Luminanz entsprechen, wobei in einer ersten Bank ein kontinuierlicher Bereich von symmetrischen Werten bezüglich des Amplitudenpegels der mittleren Luminanz abgelegt ist, und in jeder der weiteren Banken zwei voneinander getrennte Wertebereiche von symmetrischen Werten bezüglich des Amplitudenpegels der mittleren Luminanz abgelegt sind, wobei das Spektrum des Histogramms HSd(k) durch die Bankenzählsignale (sdb(0,1,2,3)) bezüglich der betreffenden Bank ausgedrückt ist.

7. System nach Anspruch 4, 5 oder 6, dadurch gekennzeichnet, daß die Bankenzählsignale sdb(0,1,2,3) über eine Anzahl NAS von Szenenaktivitätspegeln quantisiert werden, so daß für jede Bank ein quantisierter elementarer Szenenaktivitätspegel nase(0,1,2,3) definiert wird, wobei die Gesamtheit der quantisierten Signale des elementaren Szenenaktivitätspegels die Angabe der Szenenaktivität (ias) bildet.

**8.** System nach Anspruch 6 oder 7, dadurch gekennzeichnet, daß der ersten Bank zugeordnet sind:

- eine zweite Bank, in der zwei voneinander getrennte Wertebereiche von symmetrischen Werten abgelegt sind, wobei die beiden Bereiche wiederum benachbart zu dem der ersten Bank zugeordneten Bereich von zentralen Werten sind,
- eine dritte Bank, in der zwei voneinander getrennte Wertebereiche von symmetrischen Werten abgelegt sind, wobei die beiden Bereiche wiederum jeweils benachbart zu den beiden voneinander getrennten, der zweiten Bank zugeordneten Wertebereichen sind, und
- eine vierte Bank, in der zwei voneinander getrennte Wertebereiche von symmetrischen Werten abgelegt sind, wobei die beiden Bereiche wiederum jeweils benachbart zu den beiden voneinander getrennten, der dritten Bank zugeordneten Wertebereichen sind, und die Angabe der Szenenaktivität (ias) repräsentativ für die Abwesenheit von Szenenaktivität, für eine geringe Szenenaktivität, für eine mittlere Szenenaktivität und für eine starke Szenenaktivität ist,
- die Abwesenheit von Szenenaktivität durch einen elementaren Szenenaktivitätspegel relativ zur ersten Bank definiert ist, der höher als der Mittelwert NAS/2 der Szenenaktivitätspegel ist, $nase(0) \geq NAS/2$, wobei der elementare Szenenaktivitätspegel relativ zur zweiten, dritten und vierten Bank im wesentlichen Null ist, $nase(1,2,3)=0$,
- die geringe Szenenaktivität durch einen elementaren Szenenaktivitätspegel relativ zur ersten Bank definiert ist, der höher als der Mittelwert NAS/2 der Szenenaktivitätspegel ist, $nase(0) \geq NAS/2$, wobei der elementare Szenenaktivitätspegel in Bezug auf die zweiten Bank kleiner als 1 ist, $nase(1) \leq 1$, und der elementare Szenenaktivitätspegel relativ zur dritten und vierten Bank im wesentlichen Null ist, $nase(2)=nase(3) = 0$,
- die mittlere Szenenaktivität durch einen elementaren Szenenaktivitätspegel relativ zur ersten Bank definiert ist, der höher als der Mittelwert NAS/2 der Szenenaktivitätspegel ist, $nase(0) \geq NAS/2$, wobei der elementare Szenenaktivitätspegel relativ zur zweiten und dritten Bank kleiner oder gleich Eins ist, $nase(1) \leq 1$ und $nase(2) \leq 1$, und der elementare Szenenaktivitätspegel relativ zur vierten Bank im wesentlichen Null ist, $nase(3) = 0$,
- die starke Szenenaktivität durch einen elementaren Szenenaktivitätspegel relativ zur ersten Bank definiert ist, der kleiner oder gleich dem Mittelwert NAS/2 der Szenenaktivitätspegel ist, $nase(0) \leq NAS/2$, oder durch einen elementaren Szenenaktivitätspegel relativ zur vierten Bank, der größer oder gleich dem Mittelwert NAS/2 der Szenenaktivitätspegel ist, $nase(3) \geq NAS/2$.

**9.** System nach einem der vorhergehenden Ansprüche, dadurch gekennzeichnet, daß die Mittel zum Analysieren des übertragenen Programms auf der Grundlage des Differenzsignals und der für die Szenenaktivität repräsentativen Parametern aufweisen:

- Rechenmittel (110), die mit den Mitteln zum Messen des zeitlichen Verlaufs der Bildzusammenstellung verbunden sind, wobei die Rechenmittel ein Speichern der Szenenaktivitätsparameter ermöglichen, und wobei die Rechenmittel aufweisen:
- ein Unterscheidungsprogramm, welches es ermöglicht, diejenigen Bilder der betreffenden Ordnung k bzw. diejenigen Gruppen von p Bildern auszuwählen, deren Szenenaktivitätsparameter über einem oder mehreren vorgegebenen Schwellwerten liegen, wodurch es ermöglicht wird, Zeit- und/oder Kardinaldaten zu erstellen, die repräsentativ für das Schneiden in aus p Bildern bestehende aufeinanderfolgende Einstellungen sind, aus denen sich das übertragene oder aufgezeichnete Fernsehprogramm zusammensetzt.

**10.** System nach Anspruch 9, dadurch gekennzeichnet, daß die Rechenmittel (110) als Eingang empfangen:

- ein Zeitkodesignal (ct), welches repräsentativ für die Aufeinanderfolge eines jeden Bildes der Ordnung k ist, aus denen das übertragene Programms besteht,
- ein Signal zum Anzeigen der Szenenaktivität (ias), welches repräsentativ für die Szenenaktivitätsparameter für zwei aufeinanderfolgende Bilder der Ordnung k-1, k ist, wobei das Signal von den Mitteln zum Messen des zeitlichen Verlaufs der Zusammenstellung von Bildern ausgegeben wird,
- ein Signal zur Austauschsynchronisation (se), welches eine Erfassung der dem Zeitkodesignal und dem Szenenaktivitätssignal entsprechenden Daten durch die Rechenmittel mit der Bildfrequenz ermöglicht, wobei es das Unterscheidungsprogramm ermöglicht, unter dem Unterscheidungskriterium der Angabe der Szenenaktivität eines jeden Bildes der Ordnung k bzw. Gruppe von p Bildern der Ordnung k-(p-1),k die Montagepunkte des Programms zu bestimmen, welche zwei aufeinanderfolgenden Einstellungen, P-1, P entsprechen, wobei das Unterscheidungskriterium in Bezug auf drei Einstellungstypen mit einer ausgeprägten Szenenaktivität erstellt wird, und zwar einen ersten, als übergangslose ("sec") Einstellung bezeichneten Einstellungstyp, wie etwa den Wechsel von einer Person zu einer anderen Person in einer Dialogsituation, welcher eine Szenenaktivität mit abrupter zeitlicher Variation aufweist, einen zweiten, als Überblendungseinstellung ("fondu enchaîné") bezeichneten Einstellungstyp, welcher eine Szenenaktivität mit im wesentlichen linearem zeitlichen Übergang aufweist, und einen dritten, als Einschubeinstellung ("incrustation") bezeichneten Einstellungstyp, welcher eine sprunghafte zeitliche Variation der Szenenaktivität aufweist, wobei die Rechenmittel ein für das Schneiden des entsprechenden übertragenen Programms in Einstellungen repräsentatives Signal (srdp) liefern, wobei jede Einstellung mit dem Rang P durch einen Anfangszeitkode, einen Endezeitkode definiert ist.

**11.** Verwendung eines Videoanalyseverfahrens für die Montage eines als Aufeinanderfolge von Bildern übertragenen oder aufgezeichneten Fernsehprogramms nach einem der vorstehenden Ansprüche 1 bis 10, zum Ersetzen der Arbeitsschritte zum Suchen der Montagepunkte von übertragenen Programmen bzw. Teilen von Programmen durch Sichtung im Verlauf der Arbeiten zur Nachbearbeitung von Kino- oder Videofilmen oder der Überprüfung der Konformität der Montage bzw. Übertragung des fertigen Produktes, oder der Zusammenstellung von mehrsprachig übertragenen Fernsehprogrammen.

**12.** Verwendung eines Videoanalyseverfahrens für die Montage eines als Aufeinanderfolge von Bildern übertragenen oder aufgezeichneten Fernsehprogramms nach Anspruch 11, dadurch gekennzeichnet, daß die Verwendung zur Herstellung einer Zusammenstellung von mehrsprachigen Fernsehprogrammen mittels nachträglicher Zusammenstellung von einsprachigen Progammen als Ergänzung von gemeinsamen Videobildern eines gleichen Programms aus den Schritten besteht:

- Durchführen eines Schrittes zum Analysieren eines jeden einsprachige Programms zum Erstellen der Daten, welche repräsentativ für das Schneiden in aus einer Gruppe von pl aufeinanderfolgenden Bildern bestehenden Einstellungen sind, wobei pl bei der betreffenden einsprachigen Fassung VI die Anzahl von Bildern bezeichnet, aus denen eine betreffende Einstellung PI besteht;
- Erstellen einer systematischen Korrelation zwischen den verschiedenen Einstellungen P1 einer jeden einsprachigen Fassung, welche aus einer bestimmten Anzahl pl aufeinanderfolgender Bilder bestehen, für jede betreffende einsprachige Fassung VI, um eine zeitliche Kohärenz zwischen allen Einstellungen PI einer jeden einsprachigen Fassung und jeder einsprachigen Sprachversion herzustellen, wobei es diese Korrelation ermöglicht, die Zeit- und/oder Kardinaldaten als Anzahl von aufeinanderfolgenden Bildern pl beizubehalten, aus welchen eine gegebene Einstellung PI besteht und welche als minimal und maximal angegeben sind, wodurch es ermöglicht wird, alle betreffenden einsprachigen Sprachversionen zu unterstützen;
- Speichern der Daten in Vektorform (Pml, Plt, plt), so daß ein Zusammenstellungs- bzw. Montageraster des mehrsprachigen Programms gebildet wird, bei dem der Ordnung der Einstellungen Pml, die in der endgültigen Zusammenstellung des mehrsprachigen Programms enthalten sein können, für jede betreffende einsprachige Fassung die Ordnung der Einstellung Plt, die Anzahl plt von aufeinanderfolgenden Bildern sowie die Anfangs- und Endezeitdaten der betreffenden Einstellung Plt zugeordnet sind.

**13.** Verwendung nach Anspruch 12, dadurch gekennzeichnet, daß der Schritt des Analysierens eines jeden einsprachigen Programms auf der Grundlage des für jede einsprachige Fassung VI erhaltenen, für das Schneiden in Einstellungen repräsentativen Signals (srdp) aufweist:

- einen Schritt des zusätzlichen Filterns des für das Schneiden in Einstellungen repräsentativen Signals (srdp) zum Erzeugen eines entsprechenden gefilterten, für das Schneiden in Einstellungen repräsentativen Signals (srdp),
- einen Schritt des Berechnens der Dauer der Einstellungen (DUREE) und der Übergangseinstellungen (TRANS) mittels Subtraktion der aufeinanderfolgenden Zeitkodes (ct),
- einen Schritt des Berechnens und Zuordnens eines virtuellen Zeitkode (TCIV) mit beliebigem Wert zur ersten Einstellung jeder einsprachigen Fassung VI, sowie in Wiederholschritten zu jeder weiteren nachfolgenden Einstellung PI eines virtuellen Zeitkode, der die Beziehung erfüllt:

$$TCIV(PI) = TCIV(PI\text{-}1) + DUREE(PI\text{-}1) + TRANS(PI\text{-}1),$$

- einen Schritt des Erzeugens eines verarbeiteten, für das Schneiden in Einstellungen repräsentativen Signals für die betreffende einsprachige Fassung (srdpt), wobei das Signal die Identifizierung einer jeden Einstellung P1 ermöglicht und außer dem realen Zeitkode enthält:
- einen virtuellen Zeitkode,
- eine Einstellungsnummer,

- eine Dauer,
- eine Dauer der dazugehörigen Übergangseinstellung.

14. Verwendung nach Anspruch 12 oder 13, dadurch gekennzeichnet, daß für eine Anzahl L von einsprachigen Fassungen die Korrelation in Gruppen von zwei einsprachigen Fassungen durchgeführt wird, wobei die Korrelation zwischen aufeinanderfolgenden Einstellungen Pl, Pl+l von zwei einsprachigen Fassungen V1, Vl+l mittels vergleichender Analyse der Dauer und/oder der entsprechenden Anzahl von Bildern pl, pl+1 für die betreffenden Einstellungen, oder mittels einer linearen Kombination dieser Dauern bzw. der Anzahlen von aufeinanderfolgenden Bildern an einer vorgegebenen Anzahl von aufeinanderfolgenden Einstellungen Pl, P+1,l ... P+r,l; Pl+1, P+1, l+1, ... P+r,1+1 der einen und der anderen betreffenden einsprachigen Fassung durchgeführt wird.

15. Verwendung nach einem der Ansprüche 12 und 13, dadurch gekennzeichnet, daß der Schritt des Erstellens einer systematischen Korrelation zwischen den Einstellungen P1 einer jeden einsprachigen Fassung darin besteht, auf der Grundlage des bearbeiteten, für das Schneiden in Einstellungen repräsentativen Signals (srdpt) die jeweiligen Einstellungen zweier einsprachiger Fassungen V1, Vl+l zueinander in Beziehung zu setzen, indem die Dauer (DUREE) ihrer entsprechenden Einstellungen P1 P+r,1+1 verglichen wird, wobei der Vergleich mittels Verkettung elementarer Vergleichsschritte unter dem mehr oder minder strengen Eingrenzungskriterium der Gleichheit der Einstellungsdauern (DUREE) und/oder der Übergangsdauern (TRANS) durchgeführt wird, wobei der Vergleich bei jedem elementaren Vergleich an einem Suchfenster durchgeführt wird, welches für eine Ein- stellung P1 der Ordnung P der Fassung VI eine reduzierte Umgebung der Einstellungen Pl+1 bis P+sl+1 der Fassung Vl+1 darstellt, wobei die Erstellung eines Bezugs zwischen zwei Einstellungen P1 bzw. P+sl+1 der zwei Fassungen VI, Vl+l unmittelbar gefolgt ist von einer relativen Festlegung des geringeren virtuellen Zeitkode TCIV der beiden betreffenden Fassungen VI, VI+1, wobei der virtuelle Zeitkode der darauffolgenden Einstellungen der Fassung, deren virtueller Zeitkode aktualisiert worden ist, ebenfalls aktualisiert wird, und zwar bis zur Erkennung eines bereits aktualisierten virtuellen Zeitkode.

16. Verwendung nach Anspruch 12 oder 14, dadurch gekennzeichnet, daß zum Durchführen der Zusammenstellung von mehrsprachigen Fernsehprogrammen mittels nachträglicher Zusammenstellung von L einsprachigen Programmen als Ergänzung von gemeinsamen Videobildern eines gleichen Programms der Arbeitsschritt des nachträglichen Zusammenstellens darin besteht, ausgehend von den unterschiedlichen Fassungen Vl, bestehend aus einem Videosignal ViVl und einem entsprechenden Audiosignal AuVl des Zusammenstellungsrasters, und einer als Bezugsfassung Vl genommenen der Fassungen, eine Video-Nachsynchronisierung zwischen den Videosignalen der Bezugsfassung und jeder weiteren Fassung durchzuführen, wobei zwei Einstellungen bzw. Gruppen von Einstellungen, Pl, Pl - wobei l ≠ 1 ist - der Bezugsfassung und der der Synchronisierung unterzogenen Fassung synchron sind, wenn die Differenz der Dauer der beiden Einstellungen bzw. Gruppen von Einstellungen in Bezug zueinander Null ist, wobei die nachträglich synchronisierte Einstellung mittels Auswählen und Speichern des einen der Videosignale erhalten wird, welches den entsprechenden, auf ihre jeweilige Fassung synchronisierten Audiosignalen AuV1, AuVl entspricht, so daß sie L-1 Paare von nachsynchronisierten Fassungen bilden,

- Durchführen eines paarweisen Vergleichs des Unterschieds der Dauer der Paare von nachträglich synchronisierten Einstellungen zum Bestimmen derjenigen Einstellungen, die kein Eingreifen erfordern, mittels Verknüpfung,
- Kompensieren von sehr geringen Unterschieden der Dauer von weniger als einer vorgegebenen Anzahl von Bildern mittels einer Zeitdehnungs- bzw. komprimierungsbehandlung des Audiosignals AuVl, wobei die stärkeren Unterschiede der Dauer entweder durch Unterdrücken des Audiosignals mit der größten Länge oder durch Intervention von außen kompensiert werden können.

17. Verwendung nach einem der Ansprüche 15 oder 16, dadurch gekennzeichnet, daß das Erstellen eines Bezugs zwischen den einzelnen Einstellungen jeder einsprachigen Fassung durchgeführt wird entweder durch

- Zusammenlegen am Anfang der Einstellung unter Beibehaltung der kürzeren Einstellung und Schneiden der längeren Einstellung am Ende der Einstellung oder durch
- Zusammenlegen am Ende der Einstellung unter Beibehaltung der kürzeren Einstellung und Schneiden der längeren Einstellung am Anfang des Bereichs, oder durch
- Beibehaltung der Gesamtheit von Einstellungen, wobei das Zusammenlegen am Anfang und am Ende durch Behandlung einer der einsprachigen Fassungen erreicht wird, oder
- Zuordnung aufeinanderfolgender Einstellungen, deren Gesamtdauer einen Unterschied von Null oder höchstens gleich der Dauer von einigen Bildern aufweist.

**Claims**

1. A video analysis system for editing a recorded or broadcast, televised program in the form of a succession of images, each image being recorded or broadcast in the form of audio- and video-frequency data associated with the image of order k in question and of an associated time code representative of said image, wherein said system (1) comprises:

   - means (10) for measuring the time variance of the composition of the images, by determination, between two successive images of order k-1, k, of an image difference signal and of corresponding parameters representative of the scenic activity of the recorded or broadcast program for a group of at least two successive images, of order k-1, k;
   - means (11) for analyzing the recorded or broadcast program making it possible, from said difference signal and from said corresponding parameters representative of said scenic activity, to establish data representative of the cutting-up into shots, which consist of a group of p successive images, of said recorded or broadcast, televised program.

2. The system as claimed in claim 1, wherein said means (10) for measuring the time variance of the composition of the images include:

   - means (100, 102) for storing the video component S(i,j,k) of the image signal where i indicates the index of the component sample in the active line of the image in question, j indicates the index of the active line in the image in question and k indicates the order number of the analyzed image in question, and means (100, 101, 102) for storing the component S(i,j,k-1) of the image signal of the image of prior order k-1 in question;
   - means (103) for calculating the image difference signal satisfying the relationship:

$$Sd(i,j,k) = A . [S(i,j,k) - S(i,j,k,-1)] + Sm$$

   where

   A represents a value-weighing coefficient or a predetermined function,
   Sm represents a correction coefficient which is a function of the permissible dynamic range for the component S(i,j,k) in question.

3. The system as claimed in claim 1 or 2, wherein said means (10) for measuring the time variance of the composition of the images furthermore include:

   - means (105) for calculating, for an image of order k, from said image difference signal Sd(i,j,k), a histogram HSd(k) of the number of occurrences of each amplitude level of the image difference signal Sd(i,j,k),
   - means (106) for calculating corresponding scenic-activity parameters by comparison of the distribution of the spectrum of each histogram HSd(k) with a plurality of reference models or distributions representative of corresponding scenic activities.

4. The system as claimed in claim 3, wherein said means (105) for calculating, for an image of order k from the difference signal Sd(i,j,k) or from the filtered difference signal, a histogram HSd(k) include:

   - an input interface circuit receiving the filtered difference signal $\hat{S}d(i,j,k)$, said interface circuit supplying time reference signals (srt), video data signals (sdv) and clock signals (clk);
   - a circuit generating service signals receiving, on the one hand, said time reference signals (srt) and, on the other hand, said clock signals (clk), and supplying service signals (ss),
   - a circuit for sorting the video data signals (sdv) according to a histogram distribution law using predetermined video quantizing levels, said sorting circuit receiving, on the one hand, said video data signals (sdv) and, on the other hand, sequencing signals (slb) and supplying video data signals sorted by level (sdvtn),
   - a plurality of storage registers, each register forming a bank of sorted-level values, intended to receive and to store said video data signals sorted by level (sdvtn) as a function of their level,
   - an adder circuit for down-counting in each bank the number of occurrences of the amplitude levels of the sorted video signals, which circuit is connected via a read- (L) and write- (E) BUS data-link to each of said registers forming a bank, said adder circuit delivering, after reading and down-counting each bank, a bank down-count signal (sdb) representative, for each corresponding bank, of the number of occurrences of the amplitude levels of the sorted video data signals (sdv) relating to the signal Sd(i,j,k) in question.

5. The system as claimed in claim 3 or 4, wherein said means (106) for calculating corresponding scenic-activity parameters include:

- a microprogramed sequencing unit receiving the time reference signal (srt) and supplying a bank read signal (slb),
- a buffer register interconnected via the read-BUS (L) to each of said registers forming a bank, said buffer register comprising, on the one hand, an auxiliary memory circuit enabling the bank down-count signal (sdb (0,1,2,3)) relating to each bank to be stored and, on the other hand, a conversion table, said conversion table supplying, from the bank down-count signal, a scenic-activity indicator signal (ias) for the pair of successive images of order k-l, k in question.

6. The system as claimed in either of claims 4 or 5, wherein, values, which are symmetrical with respect to the level of amplitude value corresponding to that of the average luminance, are assigned to said sorted-level value banks, a first bank being assigned a continuous range of values which are symmetrical with respect to said amplitude level of the average luminance, and two ranges of discrete values of values, which are symmetrical with respect to said amplitude level of the average luminance, being assigned to each of the other banks, the spectrum of the histogram HSd(k) being expressed by the bank down-count signals (sdb(0,1,2,3)) relating to the bank in question.

7. The system as claimed in claim 4, 5 or 6, wherein said bank down-count signals sdb(0,1,2,3) are quantized onto a number NAS of scenic-activity levels, so as to define, for each bank, a quantized elementary scenic-activity level, nase(0,1,2,3), the set of the quantized elementary scenic-activity level signals forming said scenic-activity indicator, (ias).

8. The system as claimed in claim 6 or 7, wherein, there being associated with said first bank:

- a second bank to which two ranges of discrete values of symmetrical values are assigned, these two ranges being themselves adjacent to the central-value range associated with the first bank,
- a third bank to which two ranges of discrete values of symmetrical values are assigned, these two ranges being themselves adjacent respectively to the two ranges of discrete values associated with the second bank, and
- a fourth bank to which two ranges of discrete values or symmetrical values are assigned, these two ranges being themselves adjacent respectively to the two ranges of discrete values associated with the third bank, said scenic-activity indicator (ias) is representative of the absence of scenic activity, of a low scenic activity, of a medium scenic activity and of a high scenic activity,
- the absence of scenic activity being defined by an elementary scenic-activity level, relating to the first bank, greater than the average value NAS/2 of the scenic-activity levels, nase(0) ≥ NAS/2, the elementary scenic-activity level relating to the second, third and fourth banks being substantially zero, nase(1,2,3) = 0,
- the low scenic activity being defined by an elementary scenic-activity level relating to the first bank greater than the average value NAS/2 of the scenic-activity levels, nase(0) ≥ NAS/2, the elementary scenic-activity level relating to the second bank being less than 1, nase(1) ≤ 1 and the elementary scenic-activity level relating to the third and to the fourth banks being substantially zero, nase(2) = nase(3) = 0,
- the medium scenic activity being defined by an elementary scenic-activity level relating to the first bank greater than the average value NAS/2 of the scenic-activity levels, nase(0) ≥ NAS/2, the elementary scenic-activity level relating to the second and third bank being less than or equal to one, nase(1) ≤ 1, and nase(2) ≤ 1, and the elementary scenic-activity level relating to the fourth bank being substantially zero, nase(3) = 0,
- the high scenic activity being defined by an elementary scenic-activity level relating to the first bank less than or equal to the average value NAS/2 of the scenic-activity levels nase(0) ≤ NAS/2, or by an elementary scenic-activity level relating to the fourth bank, greater than or equal to the average value NAS/2 of the scenic-activity levels, nase(3) ≥ NAS/2.

9. The system as claimed in one of the preceding claims, wherein said means for analyzing the broadcast program, from said difference signal and from the parameters representative of the scenic activity, include:

- calculator means (110) interconnected with said means for measuring the time variance of the composition of the images, said calculator means enabling said scenic-activity parameters to be stored, said calculator means comprising:

- discrimination software making it possible to select the images of order k in question, or the groups of p images, the scenic-activity parameters of which are greater than one or more predetermined threshold values, which makes it possible to establish time and/or cardinal data representative of the cutting-up into shots, consisting of p successive constituent images of said recorded or broadcast, televised program.

10. The system as claimed in claim 9, wherein said calculator means (110) receive as input:

- a time code signal (ct) representative of the succession of each image of order k, which images constitute the broadcast program,
- a scenic-activity indicator signal (ias) representative of the scenic-activity parameters for two successive images of order k-l, k, said signal being supplied by said means for measuring the time variance of the composition of the images,
- an exchange-synchronization signal (se) enabling data corresponding to said time code signal and to said scenic-activity signal to be acquired at the image frequency by said calculator means, said discrimination software making it possible, using as discrimination criterion the scenic-activity indicator of every image of order k or group of p images of order k-(p-l),k, to determine the editing points of said program, corresponding to the two successive shots, P-1, P, said discrimination criterion being established with respect to three noteworthy standard shots of scenic activity, a first standard shot, indicated by a cut shot, such as the passage from one person to another person in a dialogue situation, having a scenic activity with an abrupt time variation, a second standard shot, indicated by a lap-dissolve shot, having a scenic activity with a substantially linear time transition, and a third standard shot, designated by an overlay shot, having a pulse-type time variation of scenic activity, said calculator means supplying a signal representative, for the corresponding broadcast program, of its cutting-up into shots, signal (srdp), each shot of row P being defined by a start time-code and an end time-code.

11. A use of a video analysis system for editing a recorded or broadcast, televised program in the form of a succession of images, as claimed in one of the preceding claims 1 to 10, in order to replace the steps of searching, by means of viewing, for the editing points of the programs or parts of programs during video or cinema film post-production operations, or checking the conformity of the editing or broadcasting of the final product, or the composition of multilingual-narrative televised programs.

12. The use of a video analysis system for editing a recorded or broadcast, televised program in the form of a succession of images as claimed in claim 11, wherein, with a view to producing a composition of multilingual-narrative programs by post-composition of monolingual-narrative programs, attributes of common video images of the same program, said use consists:

- in performing an analysis step of each monolingual program in order to establish the data representative of the cutting-up into shots consisting of a group of pl successive images, where pl indicates, for the monolingual version Vl in question, the number of constituent images of a shot Pl in question;
- in establishing a systematic correlation between the various shots Pl of each monolingual version which consist of a predetermined number pl of successive images for each monolingual version Vl in question, so as to establish a time coherence between all the shots Pl of each monolingual version and each monolingual narrative, said correlation enabling the time and/or cardinal data to be adopted in terms of minimum and maximum number of successive images pl constituting a given shot Pl enabling all the monolingual narratives in question to be carried;
- in storing, in vector form (Pml, Plt, plt), said data so as to constitute an editing or composition frame of the multilingual program in which, in the order of the shots Pml which can go back into the composition of the final multilingual program, are associated, for each monolingual version in question, the order of the shot Plt, the number of successive images plt and the time data for the start and end of the shot Plt in question.

13. The use as claimed in claim 12, wherein said step for analyzing each monolingual program comprises, from the signal representative of the cutting-up into shots (srdp) obtained for each monolingual version V1:

- a step for complementarily filtering of said signal representative of the cutting-up into shots (srdp) in order to generate a corresponding filtered signal representative of the cutting-up into shots ($\hat{\text{srdp}}$),
- a step for calculating the duration of the shots, (DUR), and of the transition shots (TRANS) by subtraction of the successive time codes (ct),

- a step for calculating and assigning, to the first shot of each monolingual version Vl, a virtual time code (TClV) or arbitrary value and, by recurrence, for each subsequent successive shot Pl, a virtual time code satisfying the relationship:

$$TCIV(Pl) = TCIV(Pl\text{-}1) + DUR(Pl\text{-}1) + TRANS(Pl\text{-}1),$$

- a step for creating a processed signal representative of the cutting-up into shots for the monolingual version in question (srdpt), said signal allowing the identification of each shot P1 and containing, beyond to the real time code,

  . a virtual time code,
  . a shot number,
  . a duration,
  . a duration of the associated transition shot.

14. The use as claimed in claim 12 or 13, wherein, for a number L of monolingual versions, said correlation is performed by a group of two monolingual versions, the correlation between successive shots Pl, Pl+1 of two monolingual versions Vl, Vl+l being performed by comparative analysis of the duration and/or of the corresponding number of images pl, pl+1 for the shots in question, or of a linear combination of said durations or of said numbers of successive images, over a predetermined number of successive shots P1, P+1,l ...P+r,l; Pl+1, P+1,l+1, ...P+r,l+1 of both monolingual versions in question.

15. The use as claimed in one of claims 12 and 13, wherein said step for establishing a systematic correlation between the shots Pl of each monolingual version consists, from said signal representative of the cutting-up into a processed shot, (srdpt), in performing a putting-into-relationship operation, shot to shot, between two monolingual versions Vl, Vl+1, by comparison of the duration (DUR) of their corresponding shots Pl; P+r,l+1, said comparison being performed by concatenation of elementary comparison steps based on a constraint criterion of a more or less strict equality of the shot durations (DUR) and/or of the transition durations (TRANS), said comparison being performed, for each elementary comparison, on a search window constituting, for a shot Pl of order P of the version Vl, a reduced environment of shots Pl+1 to P+sl+1, of the version Vl+1, the putting into relationship of two shots, respectively P1 and P+sl+1, of the two versions Vl, Vl+1 being immediately followed by a relative reframing of the shorter virtual time code TClV of the two versions Vl, Vl+1 in question, the virtual time code of the next shots of the version, the virtual time code of which has been re-updated, also being re-updated, until the recognition of an already re-updated virtual time code.

16. The use as claimed in claim 12 or 14, wherein, with a view to producing said composition of multilingual-narrative televised programs by post-composition of L monolingual-narrative programs, attributes of common video images of the same program, said post-composition operation consists, from the various versions Vl constituted by a video signal ViVl and a corresponding audio signal AuVl of said composition frame, and from one of the versions taken as the reference version, Vl, in performing a video post-synchronization between the video signals of said reference version and of each other version, two shots, or groups of shots, Pl, Pl, with l ≠ 1, of the reference version and of the version subjected to synchronization being synchronous when the difference in duration of the two shots, or groups of shots, put into relationship is zero, the post-synchronized shot being obtained by selection and storage of one of the corresponding video signals of the corresponding audio signals AuVl, AuVl, which are respectively synchronized to their corresponding version, so as to constitute L-1 pairs of post-synchronized versions,

  - in performing a comparison, two by two, of the difference in duration of the pairs of post-synchronized shots in order to determine, by intersection, the shots which require no intervention,
  - in compensating for the very small duration differences, less than a predetermined number of images, by time-compression or -expansion processing of the audio signal AuVl, the larger differences in duration being able to be compensated for either by suppression of the longest-duration audio signal or by external intervention.

17. The use as claimed in claims 15 or 16, wherein the putting into relationship, shot to shot, of each monolingual version consists in performing either

  - a start-of-shot coincidence operation, with preservation of the shortest shot and end-of-shot cutting of the longest shot, or

- an end-of-shot coincidence operation with preservation of the shortest shot and start-of-range cutting of the longest shot, or
- a preservation of all the shots, the start- and end-of-shot coincidence operation being obtained by processing one of the monolingual versions, or
- an association of consecutive shots, the overall duration of which has a difference which is zero or at most equal to the duration of a few images.

EP 0 540 403 B1

# FIG.1.

MAGNÉTOSCOPE ~M

SONS | SIGNAL VIDEO | CODE TEMPOREL

1

10

ÉQUIPEMENT DE MESURE DE L'ÉVOLUTION TEMPORELLE DE LA COMPOSITION DES IMAGES SUR DÉTERMINATION DE DIFFÉRENCE DE DEUX IMAGES SUCCESSIVES

s e
SYNCHRONISATION DES ÉCHANGES

i a s
INDICATEURS D'ACTIVITÉ

CODE TEMPOREL

c t

11        110

CALCULATEUR
+
PROGRAMME INFORMATIQUE TEMPS RÉEL D'ACQUISITION

srdp

DONNÉES DU DÉCOUPAGE EN PLANS DU PROGRAMME ENREGISTRÉ (FICHIER INFORMATIQUE, ÉDITION....)

# FIG.2a.

# FIG.2b.

NOMBRE D'OCCURENCES

NIVEAUX VIDEO

1) PAS DE CHANGEMENT DE PLAN
PEU DE MOUVEMENTS
ACTIVITÉ FAIBLE, HISTOGRAMME
CENTRÉ SUR UN NOMBRE RESTREINT
DE NIVEAUX VIDÉO

NOMBRE D'OCCURENCES

NIVEAUX VIDEO

2) CHANGEMENT DE PLAN OU
MOUVEMENTS INPORTANTS.
ACTIVITÉ FORTE, LARGE ETALEMENT
DE L HISTOGRAMME SUR L'ENSEMBLE
DES NIVEAUX VIDÉO

NOMBRE D'OCCURENCES

NIVEAUX VIDEO

3) HISTOGRAMME DES NIVEAUX DU
SIGNAL NUMÉRIQUE REPRÉSENTANT
LA LUMINANCE D'UNE IMAGE VIDÉO
AXE VERTICAL : ECHELLE LOG($10^0$ à $10^5$)
AXE HORIZONTAL : NIVEAU VIDEO (0 à 255)

# FIG.2c.

ADDITIONNEUR ADD — 1055

1054_0 — BANQUE 0 B0 — BUS_L

1054_1 — BANQUE 1 B1

1054_2 — BANQUE 2 B2

1053_3 — BANQUE 3 B3

sdb

BUS_E

sdb (0,1,2,3)

1052 — sdvtn

TRI DES DONNÉES ET GESTION DES BANQUES

sdv D0 D7

clk

ss

1053 — SIGNAUX DE SERVICE

slb

UNITÉ DE SÉQUENCEMENT MICRO PROGRAMMÉE

1062 — REGISTRE TAMPON + TABLE DE CONVERSION

ias

1061

INTERFACE D'ENTRÉE

srt

RÉFÉRENCES TEMPORELLES

1050

1051

ENTRÉE 4.2.2 SIGNAL DE DIFFÉRENCE FILTRE DE 104

$\widehat{Sd}(i,j,k)$

FONCTION HISTOGRAMME

FONCTION QUANTIFICATION

105

CONSOLE OU CALCULATEUR — 1060

106

REGISTRE DE COMMUNICATION

1063

1064 — se

ias — 1065

SYNCHRONISATION DES ÉCHANGES

INDICATEURS D'ACTIVITÉ

FIG.3a.

NOMBRE D'OCCURENCES
NO

100

10

1

0   16   32                                    NIVEAUX VIDEO

1) HISTOGRAMME DES NIVEAUX DU
   SIGNAL NUMÉRIQUE REPRÉSEN-
   -TANT LES DIFFÉRENCES INTER
   IMAGES EN LUMINANCE

BANQUE 0
BANQUE 1
BANQUE 2
BANQUE 3

0              N/2              N

2) RÉPARTITION DES NIVEAUX
   DANS DES BANQUES (DANS
   L'EXEMPLE 4 BANQUES,
   CENTRÉES SUR LA
   DIFFÉRENCE NULLE )

NOTE : LA LARGEUR DE CHAQUE
        BANQUE DÉPEND DU
        NOMBRE DE BANQUES ET
        D'UN PARAMÈTRAGE LIÉ A
        LA NATURE DES IMAGES

NOMBRE D'OCCURENCE
NO

ECHELLE DE QUANTIFICATION
N$\Delta$S

100

10

1

0   1   2   3                                  NUMÉRO DE BANQUE

3) HISTOGRAMME DES COMPTES
   DES BANQUES ET ÉCHELLE
   DE QUANTIFICATION.
NOTE : CETTE ÉCHELLE PEUT ÊTRE
        NON LINÉAIRE ET PARAMÈTRÉE
        (SUIVANT LA NATURE DES
         IMAGES, DE LEUR ANALYSE.)

NIVEAU D'ACTIVITÉ
N$\Delta$S

4

3

2

1

0

nase (0   1   2   3 )
        ias

INDICATEUR D'ACTIVITÉ
SCÉNIQUE

4) INDICATEURS D'ACTIVITÉ
   ISSUS DE LA QUANTIFICATION
   DES COMPTES DES BANQUES

FIG.3b.

# FIG.3c.

1 EXEMPLE DE GABARIT DE DÉCISION DU NIVEAU D'ACTIVITÉ

1) PAS D'ACTIVITÉ
NASE(0)>2
NASE(1)=0
NASE(2)=0
NASE(3)=0

2) ACTIVITÉ FAIBLE
NASE(0)>2
NASE(1)≥1
NASE(2)=0
NASE(3)=0

3) ACTIVITÉ MOYENNE
NASE(0)>2
NASE(1)≤1
NASE(2)≥1
NASE(3)=0

4) ACTIVITÉ FORTE
NASE(0)≤2
OU
NASE(3)≥2

ACTIVITÉ SCÉNIQUE

SEC

ACTIVITÉ SCÉNIQUE

FONDU ENCHAÎNÉ

INCRUSTATION

FIG.4a.

| ORDRE DES PLANS<br>P | CODE TEMPOREL<br>ct<br>tI : m : s : cs | DURÉE DU PLAN EN<br>NOMBRE D'IMAGES<br>p = |
|---|---|---|
| 1 | 0 : 02 : 00 : 00 | 200 |
| 2 | 0 : 02 : 08 : 00 | 100 |
| 3 | 0 : 02 : 12 : 00 | 1 |
| 4 | 0 : 02 : 12 : 01 | 1 |
| 5 | 0 : 02 : 12 : 02 | 5 |
| 6 | 0 : 02 : 12 : 07 | 500 |
| 7 | 0 : 02 : 37 : 07 | |

srdp

SIGNAL RÉPRESENTATIF DU
DÉCOUPAGE EN PLANS

FIG.4b.

# FIG.5a.

SOURCE D'IMAGES
ET DE SONS

SOURCE D'IMAGES
ET DE SONS

M1
Ml

Ml

TRANSFERT SUR BANDE
MAGNÉTIQUE
AVEC
REPÉRAGE TEMPOREL

TRANSFERT SUR BANDE
MAGNÉTIQUE
AVEC
REPÉRAGE TEMPOREL

SONS

SIGNAL
VIDÉO

CODE
TEMPOREL

SONS

SIGNAL
VIDÉO

CODE
TEMPOREL

DISPOSITIF D'ANALYSE VIDÉO DU MONTAGE
DES PROGRAMMES ENREGISTRÉS — 1

⇓ srdp — 2

POST SYNCHRONISATION VIRTUELLE
DES PROGRAMMES MULTILINGUES — 3

spsv

LISTE SÉQUENTIELLE DES PLANS SANS
RELATION ÉTABLIE DE FAÇON DÉFINITIVE

Vi Vl
+Au Vl
IMAGES+SONS
+ CODE TEMPOREL
DESTINÉS A LA
COMPOSITION
DU PRODUIT FINAL

COMPOSITION DU PROGRAMME
COHÉRENT POUR L'ENSEMBLE
DES SOURCES IMAGES ET SONS — 4

PRODUIT FINAL
IMAGES+SONS MULTIPLES

# FIG.5b.

DONNÉES DES DÉCOUPAGES EN PLANS DES PROGRAMMES ENREGISTRÉS

srdp

MICRO ORDINATEUR
+
PROGRAMME INFORMATIQUE DE TRAITEMENT

2
20

spsv

LISTE SEQUENTIELLE DES PLANS SANS RELATION
ÉTABLIE DE FAÇON DEFINITIVE.
(FICHIER INFORMATIQUE, ÉDITION,...)

| VERSION 1 | | VERSION 2 |
|---|---|---|
| TRANS P_2 | | TRANS M_2 |
| DURÉE P_1 | | DURÉE M_1 |
| TRANS P_1 | | TRANS M_1 |
| DURÉE P | | DURÉE M |
| TRANS P | | TRANS M |
| DURÉE P+1 | | DURÉE M+1 |
| TRANS P+1 | | TRANS M+1 |

ALGORITHME DE COMPARAISON AVEC CRITERE D'ÉGALITÉ PROCHE
OU TRÈS PROCHE POUR 3 PLANS CONSÉCUTIFS

# FIG.6c.

## FIG.6a.

VERSION 1 VERSION 2

PLAN P_1

| | | |
|---|---|---|
| DURÉE P_1 | = | DURÉE M_1 |
| TRANS P_1 | = | TRANS M_1 |
| DURÉE P | = | DURÉE M |
| TRANS P | = | TRANS M |
| DUREE P+1 | = | DURÉE M+1 |
| TRANS P+1 | = | TRANS M+1 |

ALGORITHME DE COMPARAISON AVEC CRITERE D'ÉGALITÉ STRICTE POUR 3 PLANS CONSÉCUTIFS

VERSION 1 VERSION 2

| | | |
|---|---|---|
| TRANS P_2 | | TRANS M_2 |
| DURÉE P_1 | | DURÉE M_1 |
| TRANS P_1 | | TRANS M_1 |
| DURÉE P | = | DURÉE M |
| TRANS P | = | TRANS M |
| DURÉE P+1 | | DURÉE M+1 |
| TRANS P+1 | | TRANS M+1 |

ALGORITHME DE COMPARAISON POUR 3 PLANS CONSÉCUTIFS AVEC:
-CRITERE D'ÉGALITÉ STRICTE POUR LE PLAN P
-CRITERE D'ÉGALITÉ PROCHE OU TRES PROCHE POUR LES 2 PLANS ENVIRONNANTS

## FIG.6b.

FIG.7.

LISTES D ORIGINE VERSION 1 ET VERSION 2 —1000

SELECTION DE L'ALGORITHME DE COMPARAISON —1001

ACTIVATION DE L'ALGORITHME DE COMPARAISON —1002

LISTE DES RELATIONS ENTRE PLANS —1003

NON ⟨ LISTE VIDE ⟩ OUI —1004

ANALYSE SÉQUENTIELLE DE LA LISTE —1005

1014
PLAN SUIVANT

PREMIER PLAN —1006

OUI ⟨ PRÉSENCE DE DOUBLONS ⟩ NON
1007

TRAITEMENT DES DOUBLONS —1010

CONTROLE DE VALIDITÉ ⌐1008

NON ⟨ UN PLAN VALIDE ⟩ OUI
1011

1012

PLAN VALIDE
1009

ETABLISSEMENT DE LA RELATION DE PLAN DANS LES LISTES D ORIGINE DES VERSIONS 1 ET 2

NON ⟨ FIN DE LA LISTE ⟩ OUI
1013

OUI ⟨ RÉACTION DE L'ALGORITHME ⟩ NON
1015

OUI ⟨ DERNIER ALGORITHME ⟩ NON
1016

CONTROLE DE VALADITÉ DES N°DE PLAN —1017

ALGORITHME INVERSION DE PLANS —1018

FIN

FIG. 8a.

IMAGE x    $V_1$                    $V_2$        IMAGE y = IMAGE x

            N                        P

IMAGE x +732                                      IMAGE y +732 = IMAGE x + 732
                                                  IMAGE y + 735

COUPURE EN FIN (3 IMAGES)

                                     $V_2$        IMAGE y
            $V_1$                                 IMAGE y +3 = IMAGE x
IMAGE x

            N                        P

IMAGE x +732                                      IMAGE y +735 = IMAGE x +732

COUPURE EN DÉBUT (3 IMAGES)

IMAGE x     $V_1$                    $V_2$        IMAGE y

            N                        P            COMPRESSION DE $\dfrac{735 - 732}{735}$

IMAGE x +732                                      IMAGE y +735

VITESSE VARIABLE

# FIG.8b.

IMAGE x   V₁          V₂   IMAGE y

N          P

N + 1      P+1

IMAGE x +1332          IMAGE y+1332 = IMAGE x+1332

COPIE DIRECTE DE DEUX PLANS ASSOCIÉS

IMAGE u   V₁          V₂   IMAGE v = IMAGE u

I          J

IMAGE u+108          32 IMAGES

IMAGE v + 140

I + 1      J + 1

IMAGE u +318          IMAGE v +318 = IMAGE u +318
IMAGE u +320

COPIE DE DEUX PLANS ASSOCIÉS AVEC COUPURE EN FIN (2 IMAGES)

## FIG.8c.